# EUROPEAN PATENT APPLICATION

(11) **EP 1 289 297 A2**
(43) Date of publication of application: **05.03.2003**
(21) Application number: 02255195.6
(22) Date of filing: 25.07.2002
(51) Int. Cl.: H04N 7/16

(54) **Broadcasting system capable of providing program information**

(30) Priority: 27.07.2001 JP 2001227416
(71) Applicant: MATSUSHITA ELECTRIC INDUSTRIAL CO., LTD., Kadoma-shi, Osaka 571-8501 (JP)
(72) Inventor: Mizuno, Yusuke, Kasugai-shi, Aichi 486-0915 (JP)
(74) Representative: Beresford, Keith Denis Lewis

(57) **Abstract**

Provision of a transmitting-receiving system capable of obtaining preview information. A transmitting set transmits an event information table BIT including information on whether each of the contents can be previewed or not, in what time period each of the contents can be previewed, how many times a day each of the programs can be previewed, and so on. The receiving set displays the information to provide it to viewers, and decides whether to play a preview or not based on the information.

## Description

### CROSS REFERENCE TO RELATED APPLICATION

The entire disclosure in Japanese Patent Application No. 2001-227416 (filed July 27, 2001), inclusive of specification, claims, drawings and abstract, is hereby incorporated by reference herein.

### FIELD OF THE INVENTION

This invention relates to a transmitting-receiving system for television broadcasting or the like and, particularly, to a system for handling a part of a content such as a preview thereof.

### BACKGROUND OF THE INVENTION

In digital broadcasting, there is a system under which a price for each of contents is determined and a viewer is permitted to watch a content contingent on payment for it (a pay-per-view system). In such a pay-per-view system, a viewer is allowed to watch a part of the content (which is called "preview") before purchase.

By watching a preview, the viewer can get the atmosphere or outline of the content which can be used as information for making decision weather to purchase the content or not. This can reduce the cases where the purchased content is found to be beyond expectation as compared with when the viewer must make a decision whether to purchase it or not based on a little information such as the title of the content. Namely, the viewer can purchase a content without worry.

This also gives a contents provider a big advantage of increase in purchase of contents by viewers.

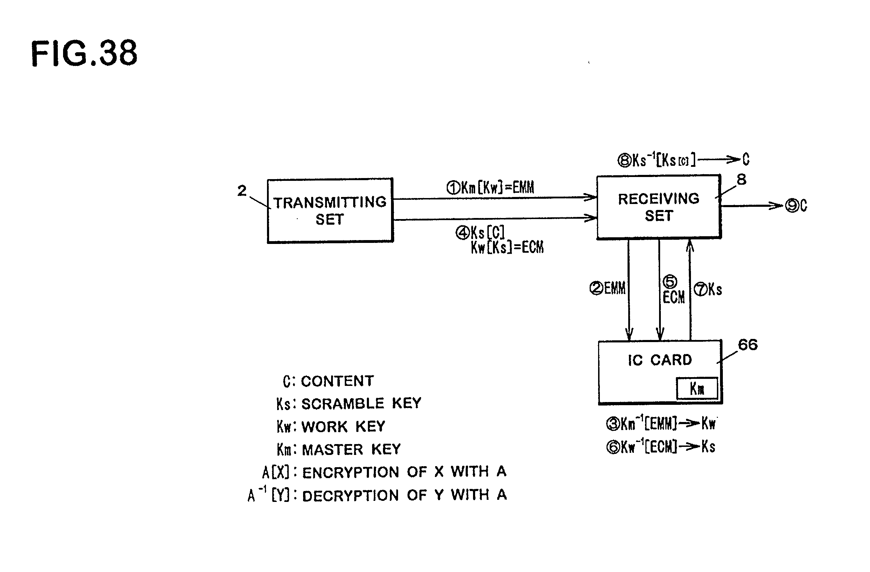

Description will be made of encryption and view subscription in broadcasting with reference to Fig. 38. In digital broadcasting, there are encrypted programs and non-encrypted programs. The non-encrypted programs are generally free of charge and available to anybody who has a receiving set. The encrypted programs are not free and the user receives a key to encode a cipher contingent on payment of the fare.

In pay broadcasting, there are general contracted broadcasting and pay-per-view broadcasting. In the general contracted broadcasting, the user can view all the programs provided. When a user subscribes to a general contracted broadcasting service, the information is recorded in an IC card 66 mounted in a receiving set and the user can receive the key.

In pay-per-view broadcasting, the user must pay for each content to receive a key thereto.

Description will be made of encryption in broadcasting with reference to Fig. 38. In Fig. 38, A[X] means to encrypt X with a key A, and A-1[Y] means to decrypt Y with the key A.

In the general contracted broadcasting, the process is as follows.
(1) A control data EMM including a work key Kw encrypted with a master key Km (Km[Kw]) is transmitted from a transmitting set 2 to a receiving set 8 of each of users who have subscribed.
(2) The receiving set 8 having received the EMM passes it to the IC card 66.
(3) The IC card 66 decrypts the EMM using the master key Km recorded therein in advance to obtain the work key Kw and stores the work key Kw in its memory. Thereby, the work key Kw is stored in the IC card 66. The transmitting set 2 changes the work key Kw periodically (about once a month) and transmits an EMM. The IC card 66 stores a new work key Kw every time the work key Kw is changed. The EMM is given only to users who have subscribed, the work key Kw is not stored in IC cards of users who have not subscribed.
(4) The receiving set 2 transmits a content C encrypted with a scramble key Ks (Ks[C]) and a scramble key Ks encrypted with a work key Kw (Kw[Ks]). The Kw[Ks] is transmitted included in control data ECM. The scramble key Ks is frequently changed with very short intervals and transmitted.
(5) The receiving set 8 receives the ECM and gives it to the IC card 66.
(6) The IC card 66 decrypts the ECM using the work key Kw stored therein to obtain the scramble key Ks. When the user has not subscribed and the IC card 66 does not have the work key Kw, the scramble key Ks cannot be obtained.
(7) The IC card 66 returns the restored scramble key Ks to the receiving set 8.
(8) The receiving set 8 decrypts the Ks[C] using the scramble key Ks.
(9) Thereby, the receiving set 8 obtains the content C.

In the general contracted broadcasting, only the users who have subscribed are allowed to view the contents as described above.

In pay-per-view broadcasting, the encryption procedure is the same as above except that the EMM is transmitted to the receiving sets 8 of all the users. This allows the users who have not subscribed to view the contents. The control data ECM include a description telling it is transmitted under a pay-per-view broadcasting system. When the IC card 66 receives the ECM for pay-per-view broadcasting and forms a scramble key Ks, the IC card 66 records the information on the fact. The receiving set 8 transmits the record to the contents provider (broadcasting center) 4 through a communication line. Thereby, the contents provider knows that a pay-per-view program is received and charges the user for it.

Information on whether a pay-per-view program can be previewed or not is included in the control data ECM for the program. When the IC card 66 receives the ECM from the receiving set 8, the IC card 66 judges whether the program can be previewed or not. When the program can be previewed, the IC card outputs the scramble key Ks for a predetermined period of time (two minutes, for example) to the receiving set 8 ((7) in Fig. 38). Thereby, the user can preview the program for the predetermined period of time.

This system, however, has a problem that any part (time) of a content, including a scene which is not suitable for previewing (such as the climax scene), can be previewed.

To solve the problem, Japanese Raid-Open Patent Publication No. H11-308595 discloses a technique for describing information on which part of a content can be previewed in the control data ECM. The IC card 66 analyzes the ECM and, when that part of the program which is being broadcasted at the moment can be previewed, gives a scramble key Ks to the receiving set 8. When that part of the program which is being broadcasted at the moment can not be previewed, the IC card 66 does not give the scramble key Ks to the receiving set 8.

Thereby, the contents provider can designate which part of a content can be previewed.

The prior art, however, has the following problems. Firstly, whether a program can be previewed or not is not known until the control data ECM is given to the IC card 66 and a reply from the IC card 66 is received. Thus, in order to know about a plurality of contents whether they can be previewed or not, the process must be repeated for all of them. The procedure is onerous and takes time.

Secondly, the control data ECM is transmitted simultaneously with the content, so that the viewer cannot know whether the content can be previewed or not before the contents starts in advance.

Thus, a broadcast transmission-reception system capable of solving the problems is demanded.

A system which has solved the second problem is disclosed in Japanese Patent-Raid Open No. H11-177944. In this system, a content for advertising contents to be broadcasted in the future (promotion content) is separately produced and broadcasted. The viewers can get the outlines of the content to be broadcasted in the future from the promotion content.

In this system, however, a promotion content must be produced in advance, which imposes a burden on the program providers. Also, when the promotion content is transmitted multiplexed on an ordinary content, the number of ordinary contents which can be multiplexed is decreased for that. Also, in some cases, the promotion content has such a strong intention to advertise as to decrease the viewer's desire to watch the content. Namely, the promotion content presents contents in an order decided by the program provider and thus is not very useful to viewers who want to know about a specific content. In such a case, the viewers want to see a part of the content.

Thus, a system which can solve the above problem and which can provide a program guide (content guide) useful for both program provider and the viewers.

In prior arts, there is no system which uses a part of a content separately from other parts for a purpose other than preview. Another object of this invention is to provide a system which can also use a part of a content for a purpose other than preview.

### SUMMARY OF THE INVENTION

(1)(2)(3) A broadcasting system of this invention comprises a transmitting set and a receiving set,
   the transmitting set comprising a multiplexing part for multiplexing a plurality of contents together with partial availability information for indicating that a part of each of said plurality of contents is available on a receiving side to generate a broadcasting signal, and a transmitting part for transmitting the broadcasting signal,
   the receiving set comprising a receiving part for receiving the broadcasting signal transmitted, and a reproducing and controlling part for reproducing the contents from the broadcasting signal received by the receiving part and outputting thus reproduced contents, and for outputting content information indicating which extracted parts of which contents are available based on the partial availability information.
   Thus, it is possible to know which ones of a plurality of contents are partially available, based on the partial availability information. Also, the transmitter needs to generate the partial availability information but does not have to produce a special content for promotion.
(4) The transmitting set of this invention further comprises a partial content extracting and uniting part for extracting a part from each of plurality of contents as a partial content based on said partial availability information and generating a content by uniting the partial contents.
   Thus, a content in which the partial contents are collected is automatically produced based on the partial availability information and transmitted.
(5) The transmitting set of this invention is characterized in that the partial availability information includes information on whether each of a plurality of contents which are currently being broadcasted is partially available or not.
   Thus, it is possible to inform the receiving set side of which ones of a plurality of contents which are currently broadcasted are partially available.
(6) The transmitting set of this invention is characterized in that the partial availability information includes information on whether each of a plurality of contents which are to be broadcasted in the future is partially available or not.
   Thus, it is possible to inform the receiving set side in advance of which ones of a plurality of contents which are to be broadcasted in the future are partially available.
(7) The transmitting set of this invention is characterized in that the part of content is a part of the content designated by time.
   This makes possible for a content broadcasted at a specific time to be treated specially on the receiving set side.
(8) The transmitting set of this invention is characterized in that the part of content is a part of components constituting the content.
   This makes possible for specific components of a content to be treated specially on the receiving set side.
(9) The transmitting set of this invention is characterized in that the part of content is a part of video of said content.
   This makes possible for a specific region of a scene in a content to be treated specially on the receiving set side.
(10) The transmitting set of this invention is characterized in that the partial availability information includes information that a part of each of the contents can be previewed.
   Thus, it is possible to know on the receiving side whether a content can be previewed or not with ease.
(11) The transmitting set of this invention is characterized in that the partial availability information includes information on one of start time, finish time and duration of a preview of each of previewable contents.
   Thus, it is possible to get information on the time during which a content can be previewed with ease on the receiving side. Also, based on the information, a control concerning the preview can be conducted.
(12) The transmitting set of this invention is characterized in that the partial availability information includes information on the number of times each of said previewable contents can be previewed.
   Thus, it is possible to limit previewing based on the permitted number of times on the receiving side.
(13) The transmitting set of this invention is characterized in that the partial availability information includes information that a scene to be taken into consideration included in a content is available by itself.
   Thus, it is possible to view only a scene to be taken into consideration or a content without scenes to be taken into consideration on the receiving side.
(14) The transmitting set of this invention is characterized in that the partial availability information includes information on one of start time, finish time and duration of the scene to be taken into consideration included in a content.
   Thus, it is possible to get information on scenes to be taken into consideration on the receiving side. Also, based on the information, a control concerning the scenes to be taken into is conducted.
(15) The transmitting set of this invention is characterized in that the partial availability information is transmitted as a part of EIT data.
   Thus, it is possible to obtain the partial availability information of a plurality of contents on the receiving side with ease.
(16) The transmitting set of this invention is characterized in that the EIT data are schedule EIT data including information on long-term programs.
   Thus, it is possible to transmit partial availability information of programs to be broadcasted in the future.
(17) The transmitting set of this invention is characterized in that the EIT data are p/f EIT data including information on short-term programs.
   Thus, it is possible to transmit partial availability information of programs being broadcasted at the moment or to be next broadcasted.
(18)(19)(20) A receiving set of this invention comprises a receiving part for receiving a broadcasting signal transmitted, and a reproducing and controlling unit for reproducing contents from said broadcasting signal received by said receiving part and outputting thus reproduced contents, and for outputting content information indicating which extracted parts of which contents are available based on said partial availability information.
   Thus, it is possible to know which ones of a plurality of contents are partially available with ease, based on the partial availability information.
(21) The receiving set of this invention is characterized in that the reproducing and controlling part displays said content information in an electronic program list.
   Thus, it is possible to know whether a part of a content is available or not.
(22) The receiving set of this invention is characterized in that the partial availability information includes information on whether each of a plurality of contents which are currently being broadcasted is partially available or not, and in that the reproducing and controlling part displays content information indicating whether each of a plurality of contents which are currently being broadcasted is partially available or not based on the partial availability information.
   Thus, it is possible to know whether a part of a content which is being currently broadcasted is available or not.
(23) The receiving set of this invention is characterized in that the partial availability information includes information on whether each of a plurality of contents which are to be broadcasted in the future is partially available or not, and in that the reproducing and controlling part displays contents information indicating whether each of a plurality of contents which are to be broadcasted in the future is partially available or not based on the partial availability information.
   Thus, it is possible to know whether a part of a content to be broadcasted in the future is available or not.
(24) The receiving set of this invention is characterized in that the part of content is a part of the content designated by time.
   This makes possible for a content broadcasted at a specific time to be treated specially.
(25) The receiving set of this invention is characterized in that the part of content is a part of components constituting the content.
   This makes possible for specific components of a content to be treated specially.
(26) The receiving set of this invention is characterized in that the part of content is a part of video of said content.
   This makes possible for a specific region of a scene in a content to be treated specially.
(27) The receiving set of this invention is characterized in that the partial availability information includes information indicating that a part of each of pay contents can be previewed, and, in that the controlling and reproducing part displays content information on whether each of a plurality of contents can be partially previewed or not based on the partial availability information.
   Thus, it is possible to know whether each of a plurality of contents can be previewed or not with ease.
(28) The receiving set of this invention is characterized in that the partial availability information includes information on one of start time, finish time and duration of a preview of each of previewable contents, and in that the controlling and reproducing part displays content information including one of start time, finish time and duration of a preview of each of said previewable contents based on the partial availability information.
   Thus, it is possible to inform the users of information on time of the preview. Also, controls concerning the preview and so on can be conducted using the information.
(29) The receiving set of this invention is characterized in that the partial availability information includes information on hours during which each of previewable contents can be previewed, and
   wherein said controlling and reproducing part checks whether it is in hours during which a previewable content can be previewed or not at the moment based on the partial availability information and determines whether the previewable content is allowed to be previewed or not.
   Thus, it is possible to designate the time during which a content can be previewed on the transmitting set side.
(30) The receiving set of this invention is characterized in that the partial availability information includes information on the number of times each of the previewable contents can be previewed, and in that the controlling and reproducing part displays content information including the number of times each of the previewable contents can be previewed.
   Thus, it is possible to limit the number of times a content can be previewed based on the permitted number of times.
(31) The receiving set of this invention is characterized in that the partial availability information includes information that a scene to be taken into consideration included in a content is available by itself, and in that the controlling and reproducing part displays content information including whether the scene to be taken into consideration can be previewed by itself or not.
   Thus, it is possible to treat the scenes to be taken into consideration specially.
(32) The receiving set of this invention is characterized in that the partial availability information includes information on one of start time, finish time and duration of the scene to be taken into consideration included in a content, and in that the controlling and reproducing part displays content information including one of start time, finish time and duration of the scene to be taken into consideration.
   Thus, it is possible to control the scenes to be taken into consideration based on the information.
(33)(34)(35)(36) A receiving set of the present invention comprises a receiving part for receiving contents transmitted from a transmitting set, an accumulating part for accumulating contents, a controlling part for controlling at least a reproducing part, and a reproducing part for reproducing the contents received by the receiving part or accumulated in the accumulating part according to the control of the controlling part,
   the controlling part comprising an accumulation controlling part for judging which contents are partially viewable based on partial availability information and for controlling the reproducing part to take out a part of each of the previewable contents and output the part of content to the accumulating part, and a reproduction controlling part for reading and reproducing said partial contents accumulate in said accumulating part and for outputting thus reproduced partial contents.
   Thus, it is possible to accumulate a partial content of each of the contents.

The term "a part of a content" as used herein is a concept including not only a part of a content designated by time but also a component of a content such as video and sound thereof, a region of a display screen on which a content is displayed, and a combination thereof.

The term "to use" as used herein is intended to refer to an action of receiving, viewing, accumulating, transmitting, controlling and so on and includes not only doing such an action affirmatively but also not doing such an action.

The term "indicating availability" as used herein includes note only indicating availability but also not indicating unavailability.

The term "a scene to be taken into consideration" as used herein is a scene which needs to be considered depending upon user attributes or regions such as a violence scene and an adult scene.

The term "components of a content" as used herein is intended to refer to elements constituting a content such as video, audio, colors and so on.

The term "a recording medium in which a program is stored" as used herein is a recording medium in which a program is stored such as a ROM, a RAM, a flexible disk, a CD-ROM, a memory card, and a hard disk. It also includes a communication medium such as a telephone line and a transmitting line. Not only a recording medium connected to a CPU and storing a program directly executed thereby such as a hard disk but also a recording medium storing a program which is executed after having been installed into a hard disk are included.

The term "program" as used herein includes not only a program directly executed by a CPU but also a compressed program, an encrypted program, and so on.

### BRIEF DESCRIPTION OF THE DRAWINGS

Other objects, features, applications and advantages of the present invention will become apparent from the detailed description of the preferred embodiments of the invention which follows, when considered in the light of the accompanying drawings, in which:
Fig. 1 is a view illustrating the entire constitution of a receiving system according to one embodiment of the present invention;
Fig. 2 is a view illustrating the relation between transport streams and services.
Fig. 3 is a schematic diagram illustrating an outline of a transmitting set;
Fig. 4 is a view illustrating types of data to be transmitted;
Fig. 5 is a view illustrating data to be transmitted to each of the transport streams;
Fig. 6 is a view illustrating the structure of packetized data;
Fig. 7 is a view illustrating a control data NIT;
Fig. 8 is a view illustrating the relation among control data;
Fig. 9 is a view illustrating the constitution of the transmitting set in detail;
Fig. 10 is a view illustrating the process of packetizing data;
Fig. 11 is a view illustrating an SI generating circuit in detail;
Fig. 12 is a view illustrating the structure of a control data EIT;
Fig. 13 is a view illustrating a state in which the control data EIT is transmitted;
Fig. 14 is a view illustrating the constitution of a receiving set;
Fig. 15 is a view of an EPG displayed;
Fig. 16 is a flowchart illustrating a receiving process;
Fig. 17 is a flowchart illustrating a process for obtaining a control data SDT;
Fig. 18 is a flowchart illustrating a process for obtaining preview information;
Fig. 19 is a flowchart illustrating a receiving process including the reception of preview information;
Fig. 20 is a flowchart illustrating a receiving process including the reception of preview information;
Fig. 21 is a view illustrating a transmitting set according to another embodiment;
Fig. 22 is a view illustrating a receiving set according to another embodiment;
Fig. 23 is a view illustrating the constitution of hardware of the receiving set;
Fig. 24 is a view illustrating the constitution of hardware of an IC card;
Fig. 25 is a flowchart illustrating a preview accumulating process.
Fig. 26 is a list of previewable contents;
Fig. 27 is a flowchart illustrating an automatic preview accumulating process;
Fig. 28 is a flowchart illustrating an automatic preview accumulating process;
Fig. 29 is a flowchart illustrating an automatic preview accumulating process;
Fig. 30 is a flowchart illustrating an automatic preview accumulating process;
Fig. 31 is a view illustrating the structure of a partial TS;
Fig. 32 is a view illustrating a format for recording on a hard disk;
Fig. 33 is a view illustrating a stream information table;
Fig. 34 is a view illustrating a stream information table;
Fig. 35 is a flowchart illustrating a process of preview viewing;
Fig. 36 is a flowchart illustrating a process of preview viewing;
Fig. 37 is a view of a menu screen for a preview; and
Fig. 38 is a view illustrating an encrypting process.

### DETAILED DESCRIPTION OF THE PREFERRED EMBODIMENTS OF THE INVENTION

### 1. First Embodiment

### (1) Entire Constitution

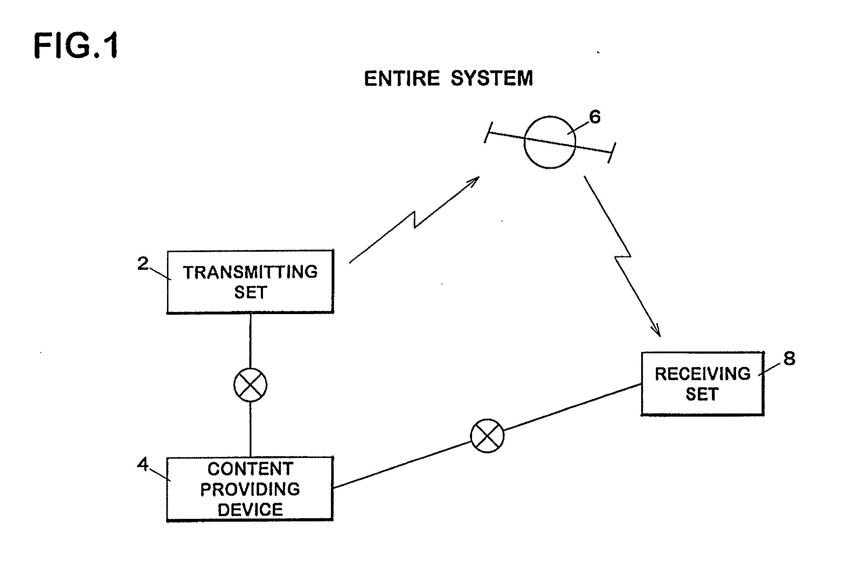

Fig. 1 shows an entire constitution of a broadcasting system according to one embodiment of this invention. A content provider transmits contents from content providing device 4 to a transmitting set 2 online or offline. The transmitting set 2 makes data from the content provider into a service (a chunk of programs corresponding to a channel of a ground-based broadcasting) and multiplexes a plurality of channels into a transport stream. The transmitting set 2 multiplexes a plurality of such transport streams and broadcasts the thus multiplexed transport streams. The receiving set 8 receives desired transport streams and services via a satellite 6.

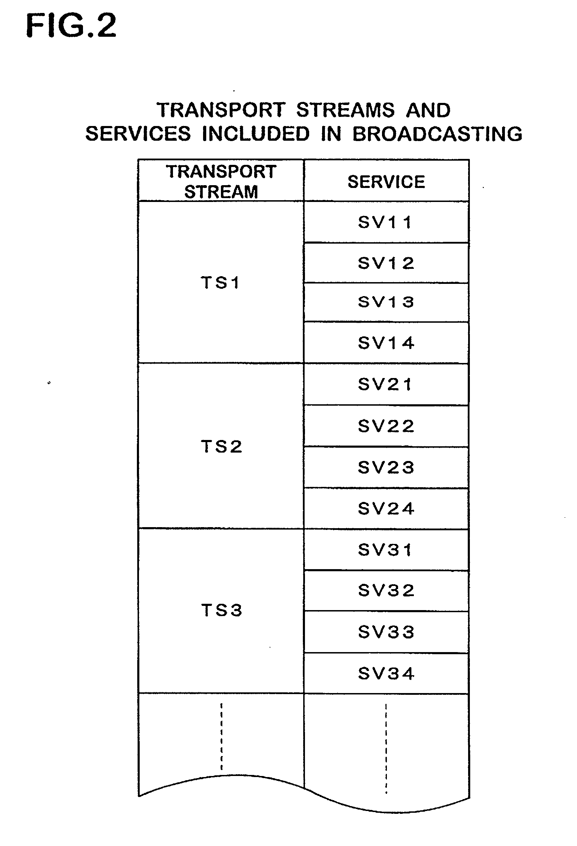

Fig. 2 shows an example of the relation between transport streams TS and services SV included in the broadcasting. A transport stream TS1 includes a plurality of services SV11, SV12, SV13 and SV14 by time-division multiplexing, and this is the case for other transport streams TS2, TS3, .... The transport streams TS1, TS2, TS3, ... are transmitted on different frequencies and thereby distinguished from each other.

### (2) Constitution of Transmitting Set and Constitution of Broadcasting Data

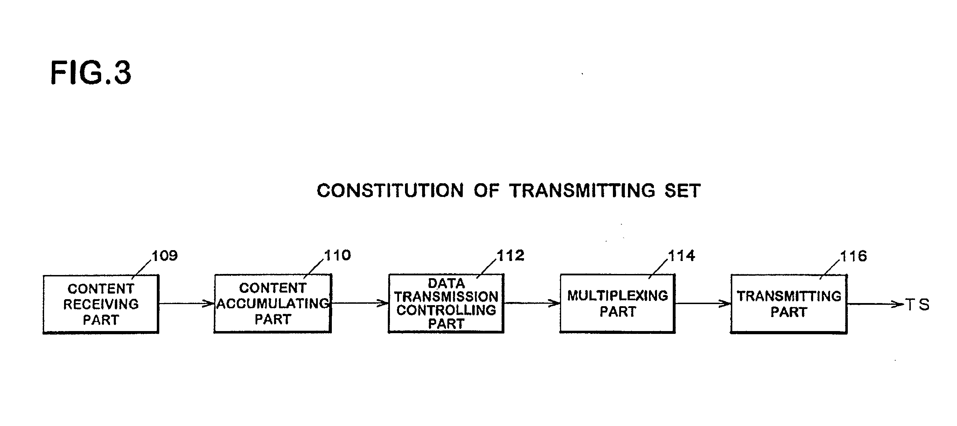

Fig. 3 shows the constitution of a transmitting set according to one embodiment. A content receiving part 109 receives contents from a content provider 4 and passes the contents to a content accumulating part 110. The contents may be passed to the contents accumulating part 110 recorded in a recording medium or the like. In the contents accumulating part 110, contents of the services SV11, SV12, ..., SV21, ..., SV34, ... are accumulated. A data transmission controlling part 112 reads the contents at predetermined broadcasting time and gives them to a multiplexing part 114. The multiplexing part 114 packetizes and multiplexes a plurality contents given thereto. The transmitting part 116 transmits the thus generated transmit streams via radio wave.

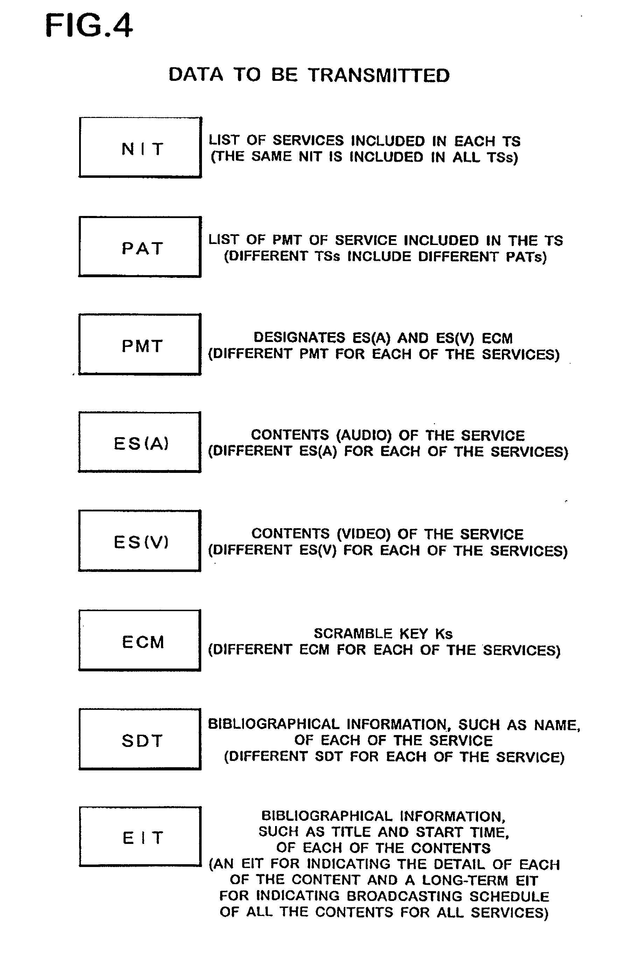

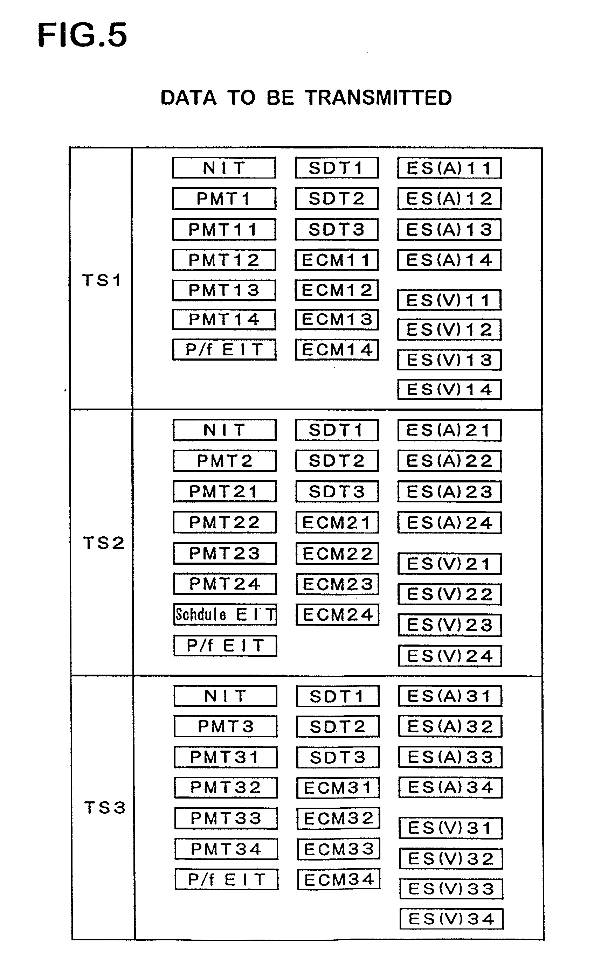

Fig. 4 shows the relation among data generated by the multiplexing operation of the multiplexing part 114. Each of the contents comprises an audio data ES(A) and a video data ES(V). As shown in Fig. 5, a plurality of audio data ES(A) and a plurality of video data ES(V) are transmitted in one transport stream. Each of the audio data ES(A) and the video data ES(V) is encrypted by a scramble key Ks, packetized and time-division multiplexed. Each of the audio data ES(A) and the video data ES(V) is provided with a different packet ID and packetized. Thus, the audio data ES(A) and the video data ES(V) in each service can be distinguished by the packet ID.

As shown in Fig. 4 and Fig. 5, different control data PMT are sent for each of the services. Each of the control data PMT has a packet ID of the corresponding service. Each of the control data PMT also has a packet ID of a data EMC necessary to obtain a scramble key Ks for decrypting an encrypted content. Thus, when a control data PMT corresponding to a desired service is obtained, the contents of the service can be obtained.

Different control data PAT are sent for each of the transport streams. Each of the control data PAT has a list of services included in the corresponding transport stream, a list of control data PMT corresponding to the services and their packet IDs. Thus, when a control data PAT is obtained, it is possible to know the services included in the corresponding transport stream and the packet ID of a control data PMT corresponding to each of the services.

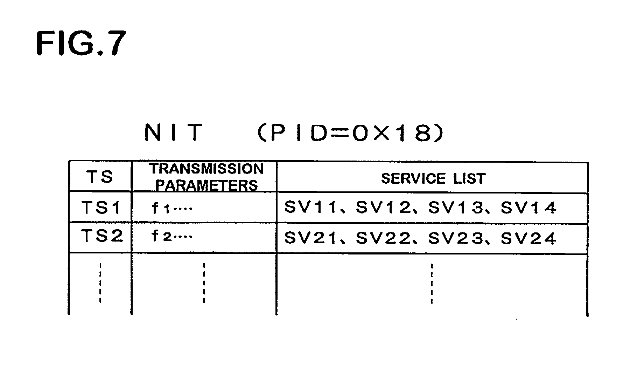

The control data NITs included in each of the transport streams are the same. The control data NIT has a list of services multiplexed in each of the transport streams. Fig. 7 shows an example of the control data NIT.

Control data SDTs and EITs for indicating the title and broadcasting time of each of the contents and so on are also generated and transmitted by the multiplexing part 14. As shown in Fig. 5, a present EIT for indicating the start time and so on of the content which is being broadcasted at the moment and a following EIT for indicating the start time and so on of the content which is to be next broadcasted are multiplexed in all the transport streams. The present EIT and the following EIT are collectively referred to as "short-term program information p/f EIT".

A schedule EIT for indicating the start time and so on of the contents which are to be broadcasted after the next one is multiplexed only in the transport stream TS2. The schedule EIT will be hereinafter referred to as "long-term program information schedule EIT".

In this embodiment, preview information (partial availability information) for indicating whether the contents are previewable or not, the start time thereof and so on is described in the program information EITs, namely the short-term program information p/f EIT and the long-term program information schedule EIT.

Description is made on the premise that this embodiment meets "STD-B10" Standard by ARIB (Association of Radio Industries and Businesses). However, this embodiment can meet other standard such as "STB-B1" and "ETS300 468".

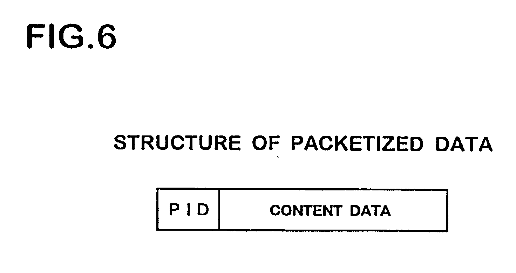

Fig. 6 shows the structure of packetized data. A packet identifier PID is added to packetized data and thereby distinguished.

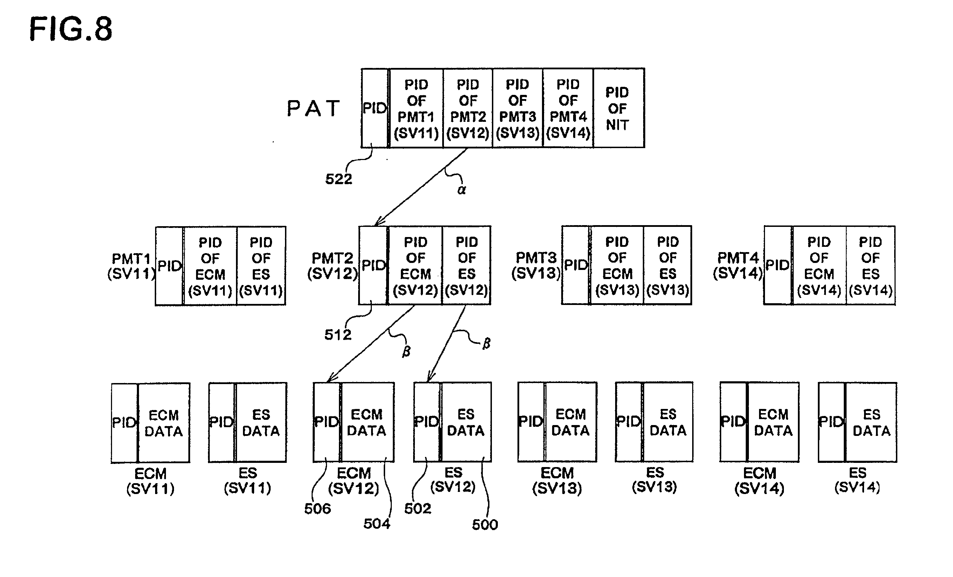

Fig. 8 shows the interrelation among the data shown in Fig. 5. In a receiving side, contents data of a service SV12 are obtained as follows. Firstly, a control data PAT is obtained and a packet ID of a control data PMT2 having data necessary to obtain the service SV12.

Based on the packet ID, a control data PMT2 is obtained. The control data PMT2 have a packet ID of contents data of the service SV12 and a packet ID of a control data ECM necessary to solve the cipher thereof.

The control data ECM is obtained based on the packet ID thereof and an encryption key is reproduced. Then, based on the packet ID of the contents data of the service SV12, the contents data (audio and video) of the service SV12 are obtained. By decoding the cipher of the contents data with the encryption key, the contents data of the service SV12 are obtained.

As described above, contents in each of the services packetized and multiplexed are distinguished by the control data PAT, PMT etc.

### (3) Details of Constitution of Broadcasting Device

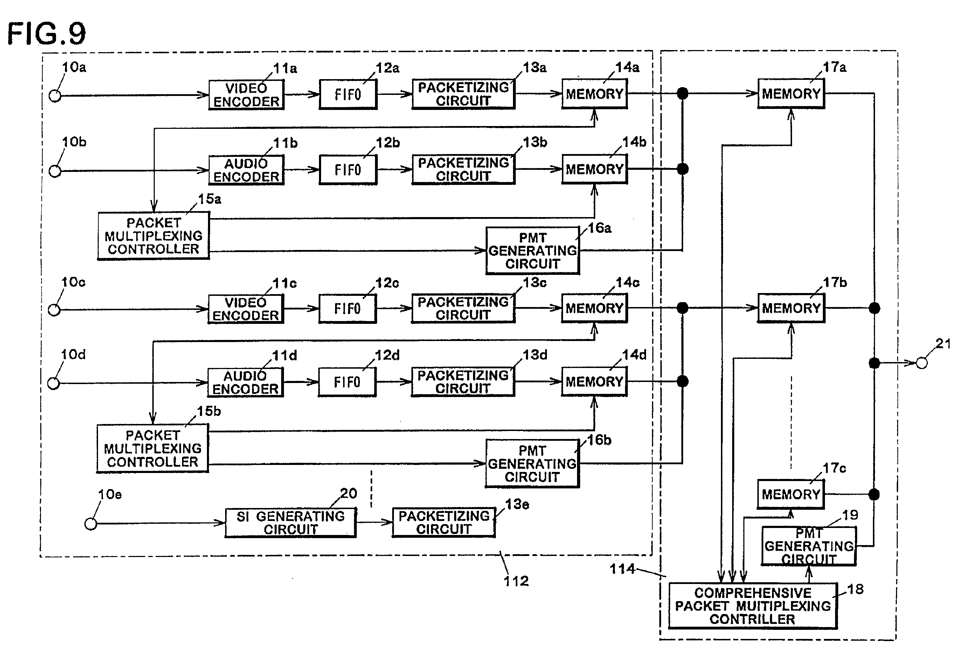

Fig. 9 is a block diagram illustrating the data transmission controlling part 112 and the multiplexing part 114 of the transmitting set 2 in detail. Although a circuit for the services SV11 and SV12 of the transport stream TS1 is herein shown, the other services SV13 and SV14 of the transport stream TS1, the services SV21 to SV24 of the transport stream TS 2, and the services SV31 to SV34 of the transport stream TS 3 are processed and multiplexed by similar circuits.

In Fig. 9, video data of service SV11 and video data of service SV12 are fed to input terminals 10a and 10c, respectively, and audio data of service SV11 and audio data of service SV12 are fed to input terminals 10b and 10d, respectively. Information data for generating program arrangement information (SI) are fed to the input terminal 10e. A "service" herein is an aggregate of programs corresponding to a channel of ground-based broadcasting and includes time-series programs composed of video and audio provided by a program provider.

The video data fed to the input terminal 10a is fed to a video encoder 11a and subjected to a compression encoding process and an encryption process therein. Based on an encryption key used in the encryption process, a packet multiplexing controller 15a generates a control data ECM.

The output of the video encoder 11a, which is of a variable rate, is subjected to a buffering process in an FIFO 12a for performing a first-in-first-out process and outputted at a fixed rate.

The video data outputted at a fixed rate from the FIFO 12a are packetized in a packetizing circuit 13a, and given a packet identifier (PID) in a memory 14a.

The audio data fed to the input terminal 10b are, as in the case with the video data, fed to a memory 14b via an encoder 11b, an FIFO 12b and a packetizing circuit 13b.

A PMT generating circuit 16a obtains the packet identifiers PIDs of the packetized video data and audio data and the packet identifier PID of the control data ECM generated based on the key used in the encryption, and generates a control data PMT (program map table). The control data PMT is also packetized as in the case with the video data and audio data.

A packet multiplexing controller 15a reads and multiplexes the video data and the audio data according to the speed at which those are encoded. Namely, the packet multiplexing controller 15a reads the video data and the audio data from the memory 14a and 14b, respectively, in a packet at a time depending upon the occupancy of the video data and audio data in the memory 14a and 14b, respectively, and time-division multiplexes each packet.

At this time, the packetized control data PMT obtained from the PMT generating circuit 16a is also time-division multiplexed as necessary. As described above, video data, audio data and a control data PMT are time-division multiplexed and the time-division-multiplexed signals are fed to a memory 17a.

The video data and audio data fed to the input terminals 10c and 10d, respectively, are also subjected to signal processing and fed to a memory 17b together with a control data PMT.

The information data fed to the input terminal be is used to generate program arrangement information (SI) such as a control data NIT (network information), a control data SDT (service information) and a control data EIT (program information). These control data are converted to section data standardized as a section form in an SI generating circuit 20 for generating the program arrangement information (SI) and outputted as SI data in accordance with the retransmission cycle of each of the tables. The SI data outputted from the SI generating circuit 20 is packetized in a packetizing circuit 13e and fed to a memory 17c.

In a PAT generating circuit 19, a control data PAT (program association table) comprehensively associated with the control data PMT of each program is generated and packetized.

A comprehensive packet multiplexing controller 18 reads the contents in the memories 17a, 17b, ... and 17c and multiplexes the same. At this time, the controller 18 controls the time division multiplexing by reading the data in a packet so that the each of the memories 17a, 17b, ... and 17c may not overflow or underflow.

At this time, the packetized control data PAT obtained from the PAT generating circuit 19 are time-division multiplexed as necessary.

As described above, the date packetized and converted into a bit stream as a transport stream (TS) are taken out of an output terminal 21 and broadcasted via an error correction circuit and a modulation circuit (which are not shown).

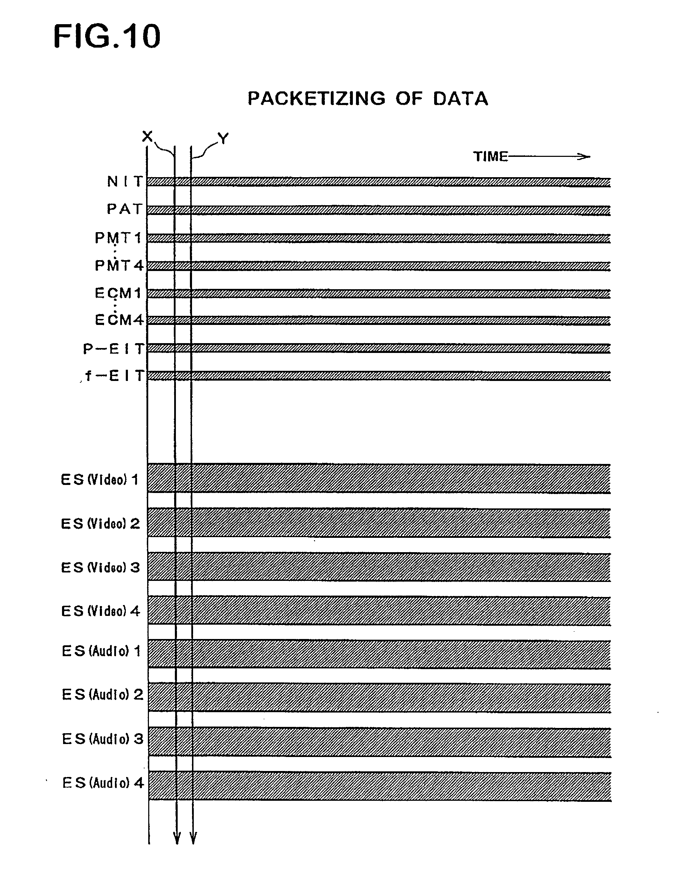

Fig. 10 schematically illustrates the manner in which the control data and contents data are time-division multiplexed. Firstly, packet multiplexing is performed as shown by X and then packet multiplexing is performed as shown by Y. After that, packet multiplexing is repeated in the same manner.

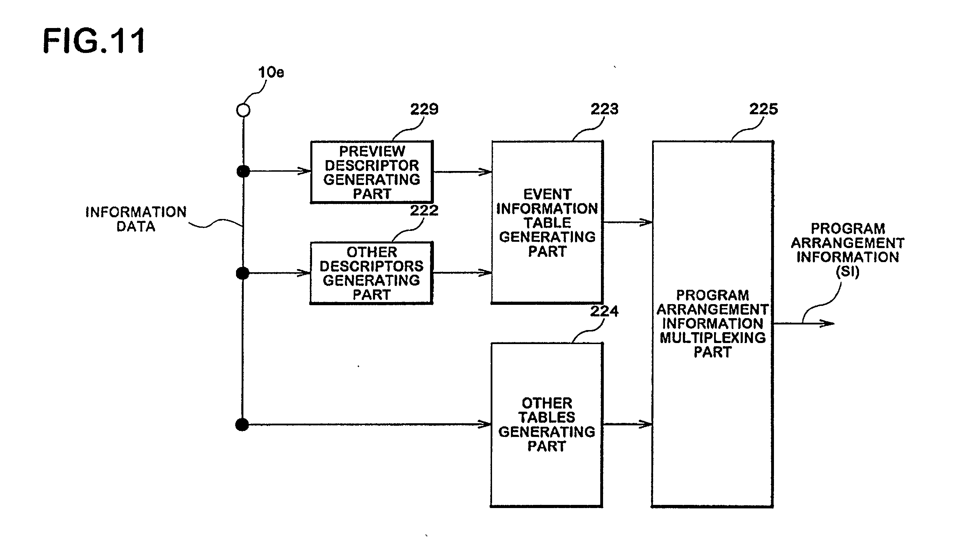

Fig. 11 is a block diagram illustrating the constitution of the SI generating circuit 20 for generating the program arrangement information (SI) according to this embodiment in detail. The program arrangement information (SI) is information defined for convenience in selecting programs, such as control data NIT, SDT and EIT. The information is defined in the form of a table.

In Fig. 11, a preview descriptor generating part 229 for generating a preview descriptor as preview information receives information data on preview from an input terminal 10e and, based on the information data, generates a preview descriptor.

An other descriptors generating part 222 generates descriptors other than the preview descriptor such as descriptors of a program title and a program start time. An event information table generating part 223 receives an output from the preview descriptor generating part 229 and an output from the other descriptors generating part 222 and generates a control data EIT (event information table) on which program information that is various information on programs is described.

The other tables generating part 224 generates tables other than the control data EIT such as a control data SDT. A program arrangement information multiplexing part 225 receives an output from the event information table generating part 223 and an output from the other tables generating part 224 and multiplexes each table to generate program arrangement information (SI) and outputs it.

The program arrangement information (SI) generated in the program arrangement information multiplexing part 225 is outputted as SI data. The SI data is packetized in the packetizing circuit 13e shown in Fig. 9, and then multiplexed in video and audio packets by a comprehensive packet multiplexing controller 18 functioning as packet multiplexing means, whereby a transport stream (TS) is generated.

Through the above procedure, the information on preview is multiplexed in video and audio packets and transmitted as a transport stream (TS). Also, executing the above steps make it possible to perform digital broadcasting to transmit digital data including information on preview.

The control data EIT generated in the event information table generating part 223 includes program information that is information on programs and the content thereof such as the title, start time and duration of each of the programs. The preview descriptor according to this embodiment is one of the descriptors in the control data EIT, and includes information on preview for allowing a part of a pay program to be previewed as a program guide.

For example, the preview descriptor may include information on whether the program can be previewed or not, on the start time and duration of the preview, on the number of times the program can be previewed and so on. Although the information on whether the program can be previewed or not may be affirmatively provided, it is possible to inform that the program can be previewed by indicating the start time and duration of the preview or by indicating that the number of the times the program can be previewed is one or more.

Thereby, a viewer can get information on the pay program, namely the start time and duration of the preview, and permitted number of times as the number of times the viewer can view the preview for free during a preview period in advance and can view the preview at the time.

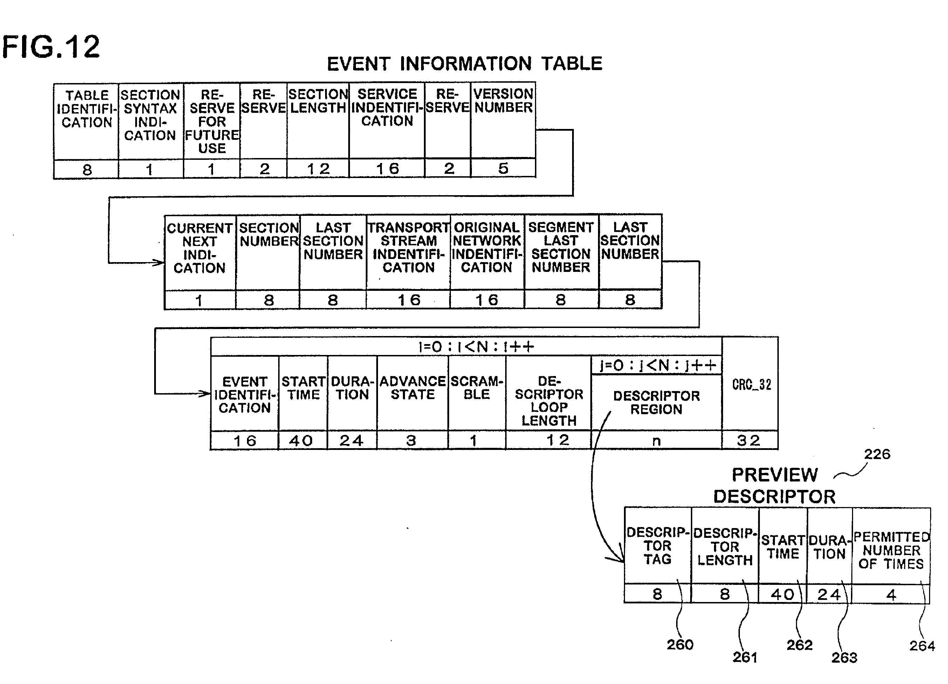

Fig. 12 shows the data structure of the control data EIT. In the control data EIT is described program information such as the start time, duration and title of the program, and whether the program is free or not. The program information is described in a descriptor region shown in Fig. 12 for each of the services and programs. In this embodiment, a preview descriptor 226 is also described in the descriptor region.

The preview descriptor has a descriptor tag 260 indicating an identification number and descriptor length 261 defining the total byte length of the descriptor following it, followed by a start time 262 and so on in which the information on the preview is described. The start time 262 indicates the time at which the period in which the program can be previewed starts, a duration 263 indicates the length of the period during which the program can be previewed, and a permitted number of times 264 indicates the number of times the program can be previewed for free during the preview period. Namely, the permitted number of the times 264 is the number of the times permitted by the program provider the program can be previewed for free.

Although the start time 262, the duration 263 and the permitted number of times 264 are shown as examples of the information on preview, the finish time and so on may be described.

In this embodiment, the preview descriptor is described in both the short-term program information p/f EIT and the long-term program information schedule EIT, which are both the control data EITs.

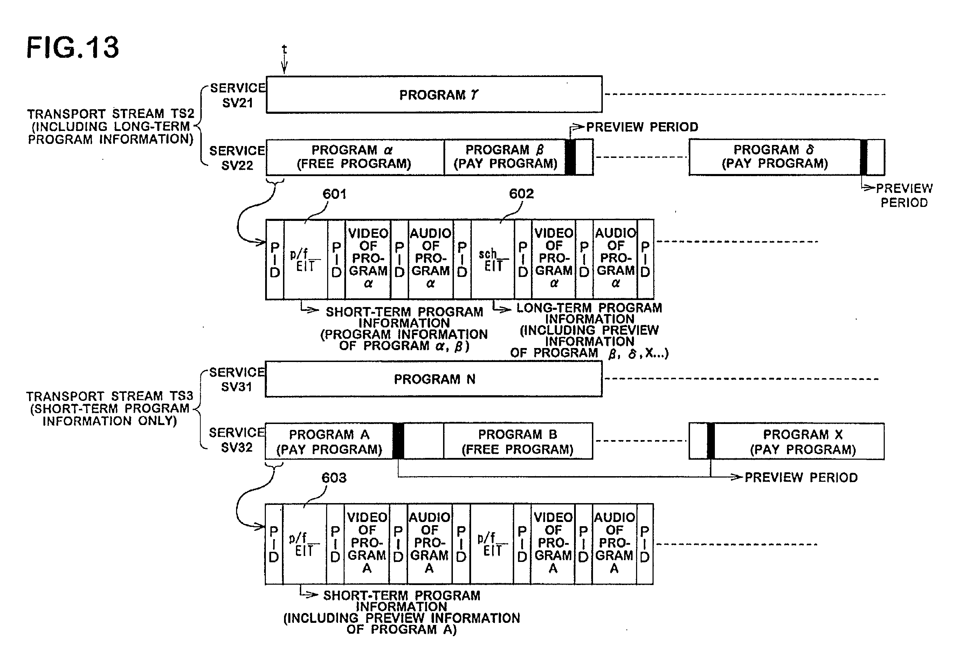

Fig. 13 is a schematic view illustrating a transport stream (TS) transmitted from the transmitting set 2, wherein a form having a transport stream TS2 including long-term program information and a transport stream TS3 including short-term program information is shown as an example.

In the transport stream TS2 are multiplexed the services SV21 and SV22, and in the transport stream TS3 are multiplexed the services SV31 and SV32. At the current time t, a program γ, a program α, a program N and a program A are being transmitted.

Digital broadcasting can provide a large number of channels and a variety of programs, so that viewers have trouble selecting a program. Thus, in a digital broadcasting system, program arrangement information (SI) is provided so that the viewers may easily select a desired program. The program arrangement information (SI) include the short-term program information p/f EIT in which information on programs which is being broadcasted at the moment and programs which are to be next broadcasted is described and a long-term program information schedule EIT in which information on programs for about a week are described. The short-term program information p/f EIT, which is transmitted in short cycles but carries a much smaller amount of information than the long-term program information schedule EIT does, can be transmitted at a high speed but can provide only information on the programs which are being broadcasted at the moment and the programs which are to be next broadcasted.

On the other hand, the long-term program schedule EIT includes information on even programs to be broadcasted in the fairly distant future. Thus, by acquiring and storing the long-term program schedule EIT and displaying the stored information on a receiving set, it is possible to provide viewers with information on programs to be broadcasted in the future. The long-term program schedule EIT is used as an electronic program list.

In the transport stream TS2 is multiplexed the long-term program schedule EIT in addition to the short-term program information p/f EIT, which has information on the program a being broadcasted at the moment or the next program β.

The long-term program schedule EIT has information on future programs β and d and information on programs B and X of another transport stream TS3.

In the transport stream TS3, the short-term program information p/f EIT is multiplexed but the long-term program schedule EIT is not. This is because the information amount of the long-term program schedule EIT is so large that, when it is multiplexed in all the transport streams, it takes up a great deal of the transmission capacity.

The short-term program information p/f EIT 603 has preview information of a pay program A. The long-term program schedule EIT 602 has preview information of pay programs β, d and X.

Thus, by acquiring preview descriptors of these pay programs with a receiving set, it is possible to provide viewers with the preview information. Namely, when the control data EIT is obtained, it is possible to provide the viewers with information on pay programs to be broadcasted in the future. When the control data EIT is obtained, it is possible to obtain preview information on a pay program which is being broadcasted at the moment without receiving the program.

The program providers can set a specific preview period for each program and set an intended part of a program as a preview section. Also, the program providers do not have to produce a promotion packet for program guide in advance. Additionally, there is no need to provide a packet for advertising use only, so that usability of the packets is not lowered.

### (3) Constitution and Operation of Receiving Set

### 3-1 Constitution of Receiving Set

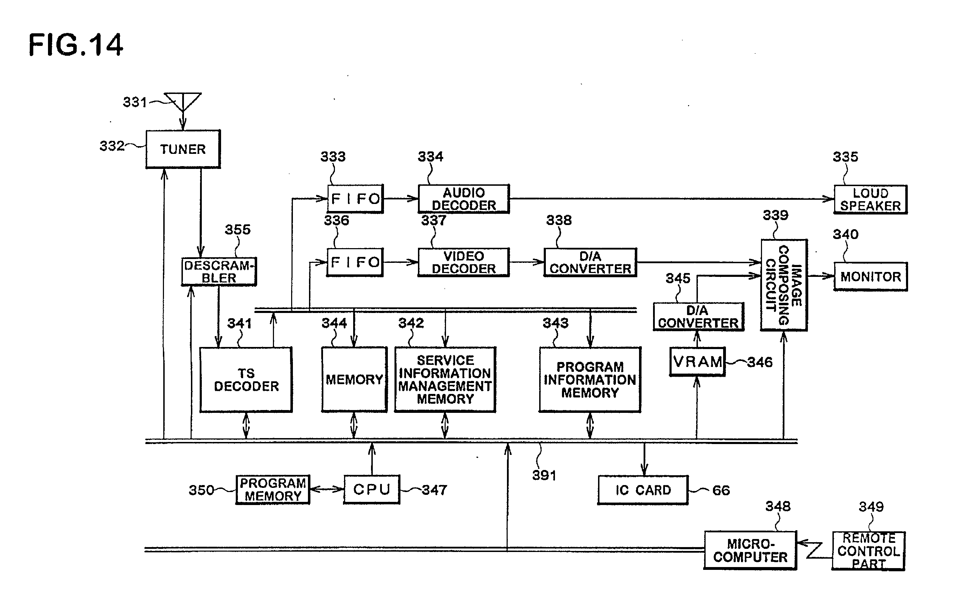

Fig. 14 is a block diagram illustrating the receiving set 8 shown in Fig. 1 in detail. Airwaves received by an antenna 331 are transferred to a tuner 332 as a receiving part. The tuner 332 selectively receives a predetermined transport stream according to the control of a CPU 347.

The output of the tuner 332 is given to a descrambler 355, which decodes a cipher provided to the transport stream using a key received from the CPU 347.

The transport stream is given to a transport stream decoder (TS decoder) 341, which restores video data and audio data from packetized data according to the control of the CPU 347.

The video data are subjected to a buffering process by a memory FIFO 336 for performing first-in-first-out processing and then supplied to a video decoder 337. The video data are decoded and decompressed in the video decoder 337 and then given to a D/A converter 338.

In the D/A converter 338, digital video data are converted to analogue video signals. The analogue video signals are displayed on a monitor 340 for displaying the video via a screen composing circuit 339.

The audio data outputted from the TS decoder 341 is subjected to a buffering process in FIFO 333 and supplied to an audio decoder 334 and decompressed therein. The thus obtained audio signals are given to a loud speaker 335.

In this embodiment, a receiving set having the monitor 340 and the loud speaker 335 is shown. However, the receiving set may be a set-top box for outputting composite signals (NTSC signals, for example).

The CPU (central processing unit) 347, which is for controlling every part of the receiving set, reads programs stored in a program memory 350 as a readable recording medium in succession to perform a process of restoring the video and audio signals, a process of restoring information data and a process of displaying program information based on the restored information data.

In this embodiment, the restoring and controlling part comprises the CPU 347 and the TS decoder 341.

### 3-2 Receiving Process

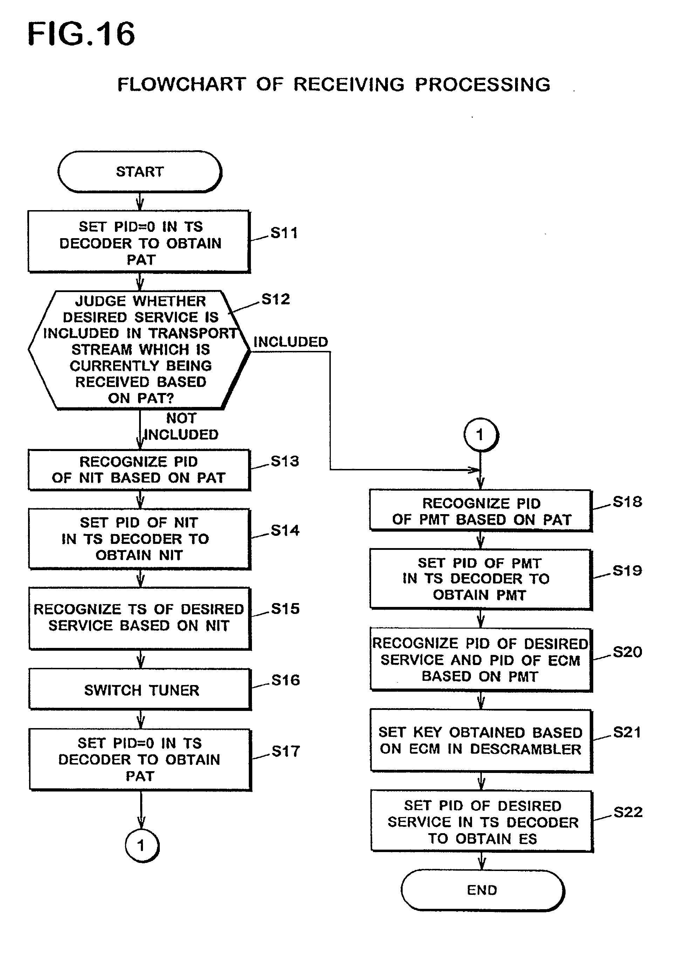

Description will be hereinafter made of the receiving process of the receiving set. The CPU 347 performs the receiving process according to programs stored in the program memory 350. Fig. 16 is a flowchart of the receiving process.

A viewer presses a remote control part 349 with a remote control to designate a desired service. The designation may be performed by pressing an operating button (not shown) provided on the receiving set body. The command is inputted into the CPU 347 via a microcomputer 348 and a bus line 391.

The CPU 347 controls the TS decoder 341 to take out a control data PAT and write it into a memory 344. The packet ID of the control data PAT is determined to "0". The CPU 347 gives the packet ID to the TS decoder 341. The TS decoder 341 takes out the control data PAT from a transport stream based on the packet ID (Step S11).

When having finished writing the control data PAT into the memory 344, the TS decorder informs the CPU 347 of the completion of the writing.

The CPU 347 analyzes the control data PAT recorded in the memory 344 and judges whether the desired service is included in the transport stream which is currently being received (Step S12). When the desired service is multiplexed in the transport stream which is being received at the moment, the process goes to Step S18.

When the desired service is not multiplexed in the transport stream which is being received at the moment, the CPU 347 obtains the packet ID of the control data NIT (see Fig. 8) (Step S13).

The CPU 347 gives the packet ID to the TS decoder and controls the TS decoder to takes out the control data NIT and records it in the memory 344 (Step S14). In the control data NIT is described which services are multiplexed in each of the transport streams as shown in Fig. 7.

When having finished writing the control data NIT into the memory 344, the TS decorder 341 informs the CPU 347 of the completion of the writing. The CPU 347 analyzes the control data NIT recorded in the memory 344 and judges in which transport stream the desired service is multiplexed (Step S15).

The CPU 347 controls a tuner 332 to receive a transport stream in which the desired service is multiplexed (Step S16). Then, the CPU 347 controls the TS decoder 341 to obtain the control data PAT (see Fig. 8)(Step S17) and obtains a packet ID of the control data PMT regarding the desired service (Step S18).

Then, the CPU 347 gives the packet ID to the TS decoder 341 to obtain the control data PMT (Step S19). Then, the CPC 347 analyzes the control data PMT and obtains a packet ID of the control data ECM and a video and audio content data ES (Step S20).

Then, the CPU 347 gives the packet ID of the control data ECM to the TS decoder 341 to obtain the control data ECM. The CPU 347 gives the thus obtained control data ECM to an IC card 66 and receives an encryption key from the IC card 66 (Step S21).

The CPU 347 gives the packet ID of the content data ES obtained in Step S20 to the TS decoder 341 to obtain the content data ES (Step S22). Since the CPU 347 gives the encryption key obtained from the IC card 66 to the descrambler 355, the cipher of the content data ES of the service that is currently being dealt with is decoded.

The TS decoder 341 gives the video and audio data of the desired service to a video decoder 337 and an audio decoder 334, respectively, via FIFOs 333 and 336, respectively. Thereby, the desired service can be received.

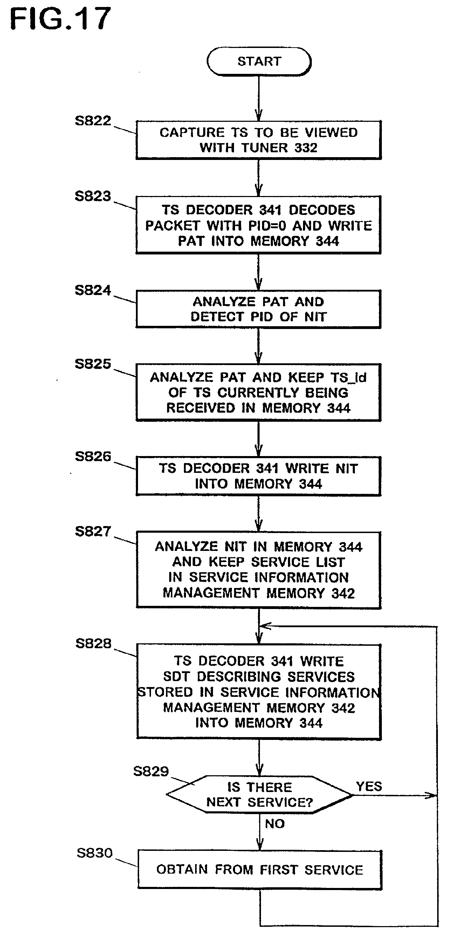

The CPU 347 controls the TS decoder to obtain control data SDTs (service information tables) of all the services of all the transport streams. The flowchart of the program for this process is shown in Fig. 17.

When receiving a transport stream (Step S822), the CPU 347 controls the TS decoder 341 to obtain a control data PAT (Step S823).

Then, the CPU 347 analyzes the thus obtained control data PAT to obtain a packet identifier of a control data NIT (Step S824). The CPU 347 also obtains an identifier TS_id of the transport stream which is being received at the moment from the control data PAT (Step S825).

The CPU 347 sets the packet identifier of the control data NIT in the TS decoder 341 to obtain the control data NIT (Step S826). The CPU 347 obtains a list of services based on the thus obtained control data NIT and records it in a service information management memory 342 (Step S827).

The CPU 347 obtains a control data SDT of the service recorded at the top of the service list recorded in the service information management memory 342. The thus obtained control data SDT is recorded in the memory 344 (Step S828). In the control data SDT is described information such as the name of the service.

Then, the CPU 347 obtains a control data SDT of the service which appears second in the service list recorded in the service information management memory 342. This procedure is repeated for all the services in the service list (Step S829).

After having obtained a control data SDT for every service, the CPU repeats the process of obtaining the control data SDT from all the services in the service list from the top (Step S830). This is performed to obtain the latest information, since the information in the control data SDT is occasionally updated.

As described above, the control data SDT of every service are recorded in a program information memory 343. Thereby, the bibliographic matters (name and so on) of all the services are recorded in the memory 344.

The CPU 347 performs controls, such as displaying the name of the service which is being received at the moment on the monitor 340, based on the bibliographic matters.

### 3-3 Process for Displaying Electronic Program Guide

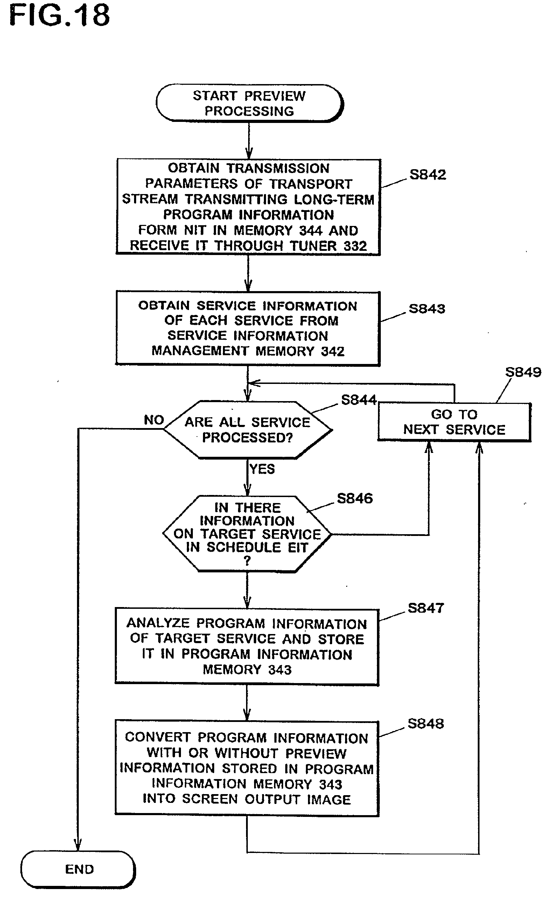

Description will be next made of the operation for providing a viewer with program information. Hereinafter described is the case of providing program information in the form of an electronic program guide called EPG. Fig. 18 shows a flowchart of the process for obtaining the preview information.

The viewer presses a button on the remote control part 349 to send a command to display the program information. The command is sent to the CPU 347 by a microcomputer 348.

The CPU 347 obtains information on in which transport stream the long-term program information schedule EIT is multiplexed based on the content of the control data NIT recorded in the memory 344. The CPU 347 controls the tuner 332 to receive the transport stream in which the long-term program information schedule EIT is multiplexed (Step S842).

The CPU 347 obtains service information of every service from the information recorded in the service information management memory 342 (Step S843). Among the services, the first service is first targeted.

The CPU 347 controls the TS decoder 341 to receive the schedule EIT, and judges whether the schedule EIT has program information on the target service (Step S846).

When the schedule EIT has the program information, the CPU records it in the program information memory 343 (Step S847). When the service is a pay program, the preview descriptor thereof is also recorded. Namely, the start time and duration of a preview are recorded. When no preview descriptor is described for a pay program, the CPU 347 records the fact. Then, the CPU 347 generates video data based on the program information and outputs the data.

The thus generated video data are written into a VRAM (Video RAM) 346 which is a RAM for video. The content in the VRAM 346 is read in accordance with a monitor synchronous signal (not shown) and converted into analogue data by a D/A converter 345, thereby generating a program guide video signal.

The program guide video signal is outputted to an image composing circuit 339. The image composing circuit 339 performs switching between a program guide video signal and a program video signal and composition of those signals according to the command of the CPU 347 or the microcomputer 348 (Step S848). Thereby, the information of the program designated by the user can be displayed on the monitor 340.

As described above, when program information for one service is generated, the CPU 347 repeats the process from Step S844 targeting the next service (Step S849).

When the schedule EIT does not have program information of the target service, the CPU 347 continues the process from Step S844 targeting the next service (Step S846).

When the above procedure is repeated for all the services, this process is completed (Step S844).

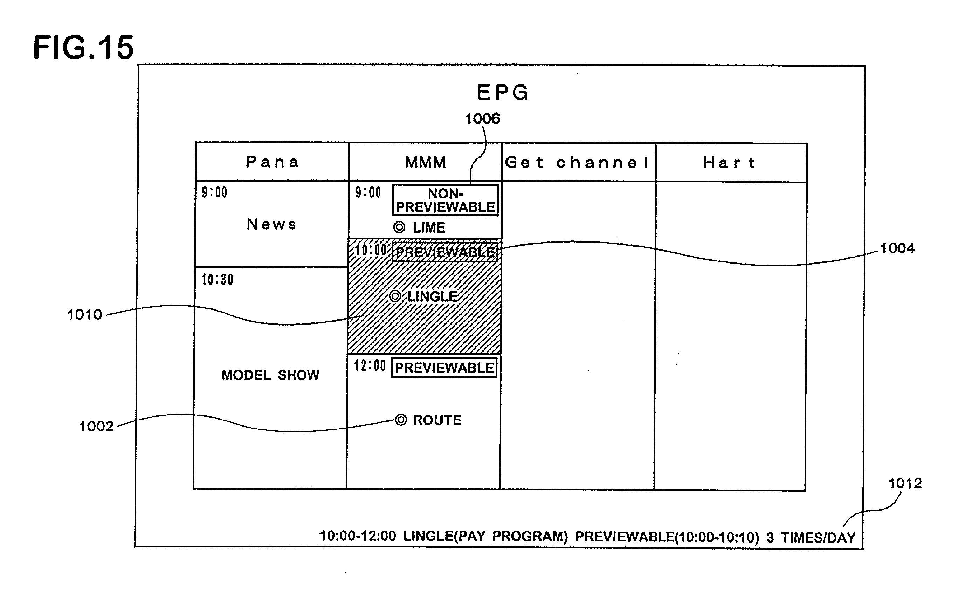

Fig. 15 shows an example of the program information displayed. In this example, programs between 9 o'clock to 12 o'clock of four services are displayed. However, by pressing a button (a four-direction cursor key, for example) on the remote control part 349, the viewer can scroll up, down, right or left the screen to see information of programs of other services or in different time periods.

In this screen, there are displayed the start time, finish time and title of the program, whether the program is free or not, whether the program can be previewed or not, and so on, based on the program information recorded. In Fig. 15, a mark 1002 (double circle) indicates that the program is a pay program (pay-per-view program). Programs without the mark 1002 are free programs (programs which can be viewed under a bulk contract).

A mark 1004 indicates that the program can be previewed. The viewer gets to know from the mark that the program can be previewed. A mark 1006 indicates that the program cannot be previewed. The viewer gets to know from the mark that the program cannot be previewed.

Detail information 1012 of the program selected with the cursor 1010 is displayed in a lower part of the screen. In Fig. 5, there is displayed the information that the program is a pay program, starts at 10 o'clock and finishes at 12 o'clock, and can be previewed three times a day, and the preview period is from 10 to 10 past 10.

The programs including the preview control program, which are stored in the program memory 350 as a machine readable medium in the above embodiment, may be stored in a read-only memory (ROM). The programs may be stored in a recording medium other than a semiconductor memory. In this case, the programs are written in a writable and readable RAM and used when the receiving set is used. Also, the program may be stored in a memory integrated with a microprocessor. The preview control program and the other programs may be stored in different regions of the recording medium.

In the above embodiment, the program information is displayed using the preview information of long-term program information. However, preview information of the program being broadcasted at the moment or the program to be next broadcasted may be displayed using preview information of short-term program information.

### 3-4 Process at the Time of Previewing

The outline of the receiving process has been shown in Fig. 16. In this section, the previewing process according to the present invention will be described. In conventional systems, whether a program is allowed to be previewed or not and the duration for which a program is allowed to be previewed are generally described in a control data ECM. Thus, a viewer can view a preview of a program for a predetermined period of time after the preview is started, and the program producer cannot designate the time at which a viewer is allowed to start previewing.

It is the system disclosed in Japanese Laid-Open Patent Publication No. H11-308595 that has solve the above problem. In this system, the problem is solved by describing which part of a content can be previewed in a control data ECM. However, the control date ECM is itself encrypted and only an IC card 66 has a key to encode it. Thus, to realize the technique of Japanese Laid-Open Patent Publication No. H11-308595, it is necessary to revise a program in the IC card 66. Namely, it is necessary to redistribute an IC card 66 to every viewer, so that the system is difficult to realize.

The embodiment of the present invention enables the program producer to designate the time period during which a program is allowed to be previewed and the permitted number of times the program can be previewed without any change on the IC card 66. It is certainly necessary to revise the processing program in the receiving set 8, but the program can be revised by download through broadcasting. Thus, the system of this embodiment is easy to realize as compared with the redistribution of IC cards 66.

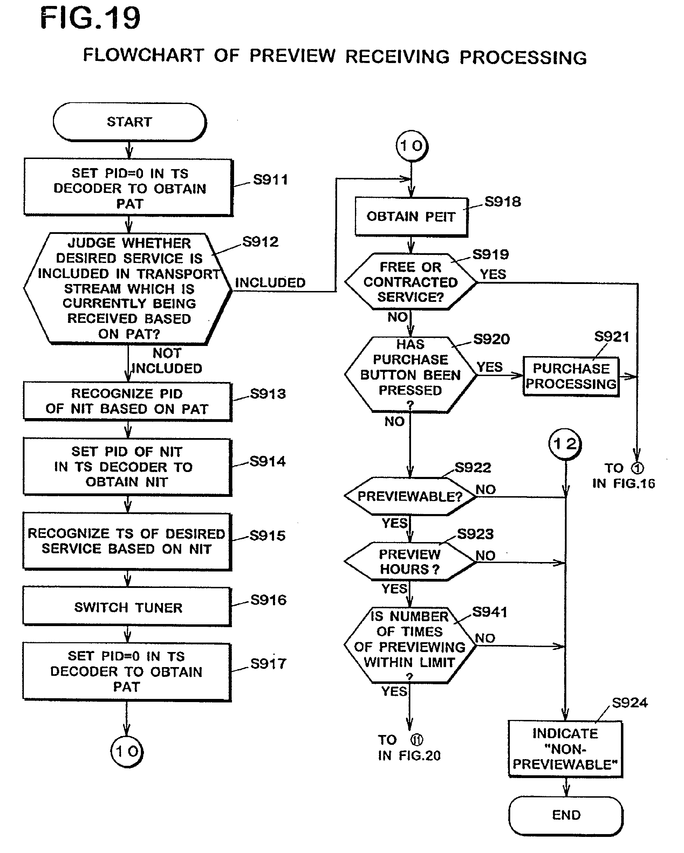

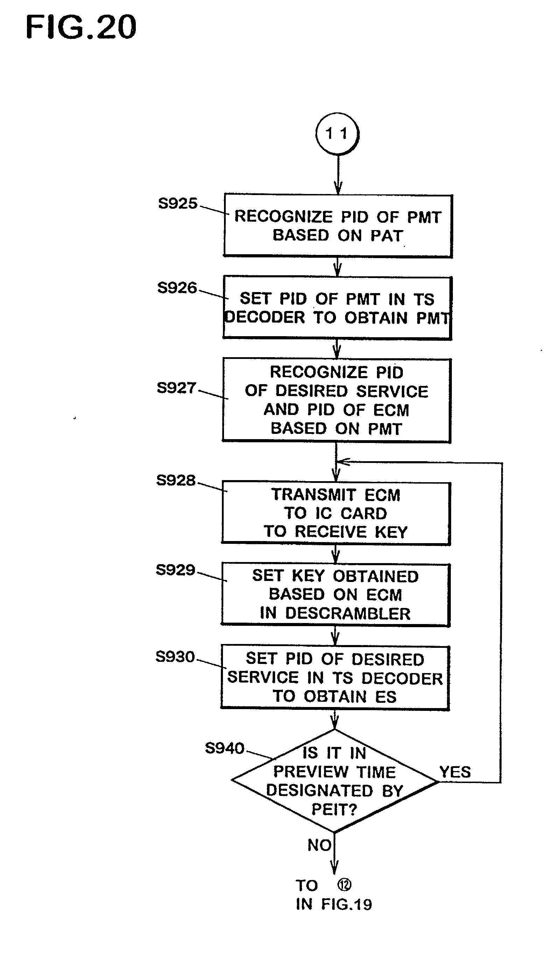

Fig. 19 and Fig. 20 show the detail of the receiving process in which the previewing process is taken into account, in the form of flowcharts. This program is stored in the program memory 350.

The processes in Steps S911 to S917 are the same as those in Stops S11 to S17 in Fig. 16. The CPU 347 controls the system to receive a transport stream in which a desired service is multiplexed through these processes.

The CPU 347 obtains a short-term program information present EIT in which program information of the desired service is described (Step S918), and judges whether the service is a pay broadcasting service (pay-per-view broadcasting service) or not based on the short-term program information present EIT (Step S919). When the service is not a pay broadcasting service, the CPU continues the process from Step S18 Fig. 16 and allows a viewer to view the program.

When the service is a pay broadcasting service, the CPU 347 judges whether a purchase button (a button on a remote control) has been pressed or not (step S920). When the purchase button has been pressed, the CPU 347 executes a purchasing process (Step S921) and continues the process from Step S18 in Fig. 16 to allow the viewer to view the program.

When the purchase button is not pressed, the CPU executes the process on the premise that the viewer wants previewing. The CPU 347 judges whether the service can be previewed or not based on the preview information described in the present EIT (Step S922). When the service can not be previewed, the CPU 347 indicates it on the screen (Step S924). That a service cannot be previewed can be judged from the presence of the description telling that the service cannot be previewed or the absence of the description telling that the service can be previewed.

When the service can be previewed, the CPU 347 obtains the time and permitted number of times the service can be previewed based on the preview information described in the present EIT. The CPU 347 obtains the current time from a built-in clock circuit and judges whether it is now the time the service can be previewed (Step S923). When it is not the time, the CPC 347 displays the fact and does not allow the service to be previewed (Step S924). At this time, the CPU 347 may obtain the following EIT or the schedule EIT and display the next preview time. The system may be so designed that the user can preselect a preview on the screen.

When the CPU 347 judges at Step 923, that now is the time when the service can be previewed, the CPU 347 obtains information on how many times the user has previewed the program today from the memory 344 and judges whether the number of the times the user has previewed the program is over the permitted number of times described in the present EIT (step S941). When the number of the times the user has previewed the program is over the permitted number of times, the CPC 347 displays the fact and does not allow the service to be previewed (Step S924).

When the number of the times the user has previewed the program is less than the permitted number of times, the CPU 347 obtains the ES of the service to decode the cipher thereof and outputs the video and audio data thereof (Steps S925 to S930).

During this process, the CPU 347 judges whether the preview time described in the present EIT has passed or not (Step S940). If not, the CPU 347 repeats the process from Step S928. When the preview time has passed, the CPU 347 displays that the preview time was over (Step S924). At this time, the CPU 347 displays a message urging the user to purchase the program.

As has been described above, according to this embodiment, the program provider can designate the time and the number of times a program is allowed to be previewed without changing the program in the IC card.

### (4) Another Embodiment

In the above embodiment, description has been made of previewing of a pay program. In a free or contracted broadcasting service, however, such preview information may be transmitted so that it may be used on the receiving side.

In the above embodiment, the preview information is used to provide the users with information and to control the previewing process. The preview information may be also used to control the preview history or to control the other equipment.

In the above embodiment, description has been made of processing of parts of programs for use in previewing. Additionally, scenes to be taken into consideration such as violence scenes and adult scenes can be similarly processed by providing descriptors (the star time, duration and so on) thereto. For example, it is possible to make a scene to be taken into consideration unable to be viewed or recorded or to display a substitute scene which is being broadcasted simultaneously with it according to user setting.

Also, highlight scenes and commercial scenes can be similarly processed by providing descriptors thereto.

In the above embodiment, the preview information is described in the program information EIT. However, the preview information may be described in other control data, or control data for the preview information may be separately provided.

Since descriptors for specifying parts of a content (a part for previewing and so on) are provided, it is possible to judge on the receiving set side that it is receiving that special part of a program which is specified by a descriptor. Thus, it is possible to grasp on the receiving set side how many viewers viewed highlight scenes or commercial scenes. This information can be transmitted to the broadcasting center through a communication circuit provided in the receiving set and utilized for various purposes.

In the above embodiment, information for designating a part of a content by time is employed as the partial availability information. However, the partial availability information may be information for designating only one of the video and audio as components of a content. Thereby, it is possible to make the video or audio alone able to be previewed. Also, the partial availability information may be information for designating a region of a display screen. Thereby, it is possible to make only a center part able to be previewed.

The partial availability information may be a combination of two or more of the information for designating a part of a content by time, information for designating a component of a content and information for designating a part of a display screen. For example, when a violence scene of a program is designated by time and the information that only the video of the program can be outputted during that time is described in the partial availability information, it is possible to put off the sound during the violence scene on a receiving set side according to user setting using the partial availability information.

In the above embodiment, a part of each of the contents designated by the partial availability information is specially handled in receiving the content. However, the part of each of the content may be specially handled in a process other than receiving the content such as in accumulating, transmitting and controlling the content.

In the above embodiment, description has been made of digital broadcasting. However, the embodiment can be also applied to analogue broadcasting. In analogue broadcasting, when the partial availability information is superimposed between vertical baselines, it is possible to reproduce the partial availability information on the receiving set side.

The other embodiments mentioned above can be also applied to the embodiment described below.

### 2. Second Embodiment

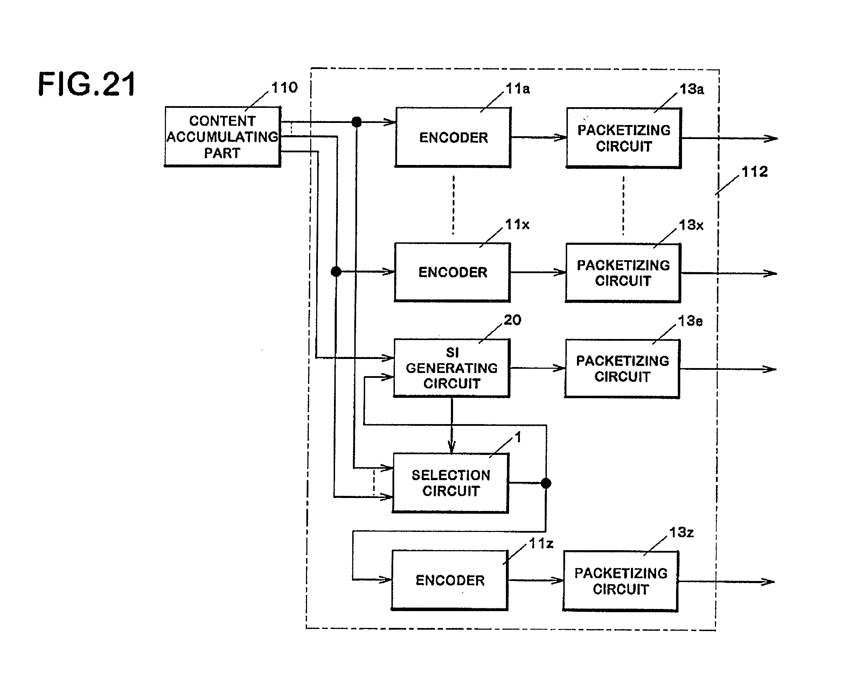

Fig. 21 shows a data transmission controlling part F of a transmitting set according to another embodiment of the present invention in detail. The other constitution is the same as that of the transmitting set shown in Fig. 3.

In this embodiment, preview parts of programs are automatically extracted to form a new service. Thus, the program providers or the broadcaster do not have to produce a service for promotion.

Content data from a content accumulating part 110 are converted into packet data by encoders 11a to 11x and packetizing circuits 13a to 13x and sent to a multiplexing part 114. In an SI generating circuit 20, data such as a program information EIT are generated. In the program information EIT, preview information is described.

All the contents are inputted from the content accumulating part 110 into a selection circuit 1. The preview information is also inputted from the SI generating circuit 20 to the selection circuit 1.

The selection circuit 1 obtains the preview time of each of the contents (programs) based on the preview information and extracts the preview part from each of the contents. The extracted parts are converted into packet data by an encoder 11z and a packetizing circuit 13z. The thus generated content is sent to the multiplexing part 114 and transmitted as in the case with the other contents.

As described above, a service in which only the preview parts are collected can be automatically generated. In this embodiment, a content extracting and uniting part is the selection circuit 1.

In the above embodiment, a new service is generated. However, the collection of the preview parts may be transmitted as a content (program). In this case, the new content generated by the selection circuit is sent to the content accumulating part 110 and transmitted in one of the services.

In the above embodiment, description has been made of the case where the program producer brings the contents data (ES) into the transmitter. When the program produces brings the programs into the transmitter in the form of transport streams, it is necessary once to restore the transport steams into content data and then to subject the data to the same process as above. In this case, since it is difficult to regenerate SI information, it is necessary to store the original SI information and to add information on the preview service thereto to generate new SI information.

According to this embodiment, a service in which only previews are collected is transmitted, so that it is easy to view or record a preview of a program on the receiving side.

This embodiment and the embodiments described below can be also applied to other partial contents such as highlight scenes as well as the preview parts.

### 3. Third Embodiment

The receiving device in third embodiment will be described. The transmission device used in the first or second embodiment can also be used for this embodiment.. In this embodiment, the receiving device has a function to store the contents that are received.

### (1) Structure of the receiving device

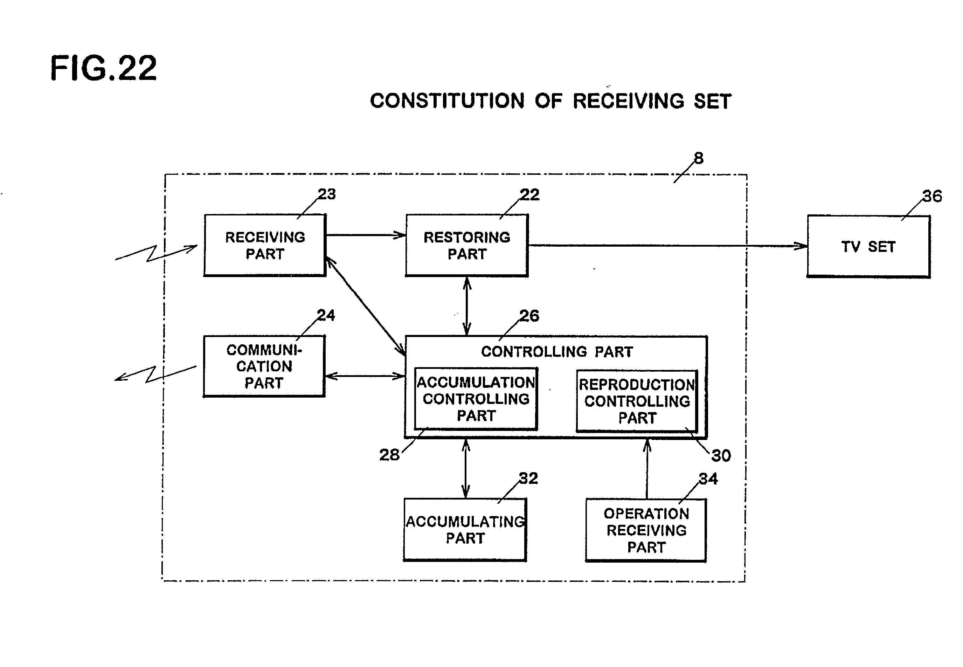

Fig. 22 shows a block diagram illustrating the structure of the receiving device 8 in an embodiment of the present invention. In this embodiment, a set-top box is illustrated as an example of the receiving device 8, this device may include a TV set 36.

A receiving part 2 receives desired content data and provides it to a restoring part 22. The restoring part 22 selects a desired service within the transport stream and restores its content. The content data thus restored is provided to the TV set 36. The TV set 36 displays images of the content data with its display (not shown) and outputs sounds its loud speaker(s).

A control part 26 controls the receiving part 23 and the restoring part 22 so that a desired service can be acquired on receipt of a command from a user via an operation command input part 34. The control part 26 comprises a storing control part 28 and a playback control part 30 therein.

The storing control part 28 automatically stores a preview program of the pay-per-view contents into a storage part 32 independent of command from the user. Consequently, a number of preview programs of pay-perview-contents are automatically stored in the storing control part 28. A playback control part 30 reads out a preview program stored in the storage part 32 in accordance with a command from a user and the preview thus read out is provided to restoring part 22 for restoration. The user can view a desired preview program according to their needs. Because preview programs are stored previously, desired preview programs can be viewed in their complete form.

A communication part 24 performs communications between the content provider's device 4 under the control of the control part 26.

The operation command input part 34 may be of signal receiving part, which receives signals from a remote controller, and the input part 34 may also be of operation command input buttons arranged on the receiving device 8.

### (2) Hardware structure of the receiving device

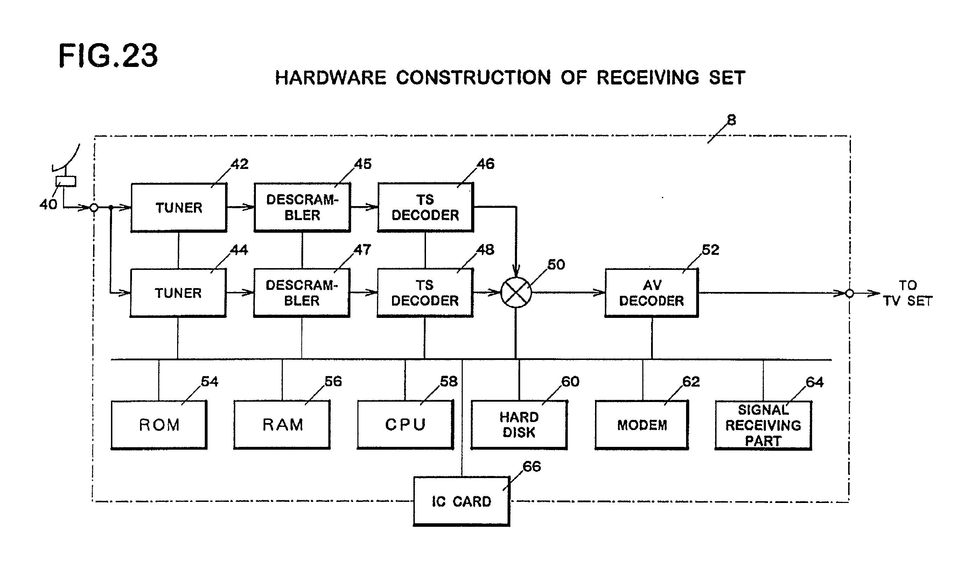

Fig. 23 shows a hardware structure of the receiving device 8 shown in Fig. 22. The receiving device 8 comprises tuners 42, 44, de-scramblers 45, 47, transport decoders (TS decoders) 46, 48, changer 50, AV decoder 52, ROM 54, RAM 56, CPU 58, hard-disk 60, modem 62, signal receiving part 64. An IC card 66 is connected to the receiving device 8 via a connector.

In this embodiment, the tuner 44 forms the receiving part 20. The de-scrambler 47 and the TS decoder 48 form the restoring part 22. The CPU 58, the ROM 54, RAM 56 form the control part 26. The hard-disk 60, forms the storage part 32. And the signal receiving part 64 forms the operation command input part 34. In this embodiment, the tuner 42, de-scrambler 45 and the TS decoder 46 each for regular reception, and, the tuner 44, the de-scrambler 47 and the TS decoder 48 each for storing preview programs are provided. However, each one of these components may be used as a dual-purpose component.

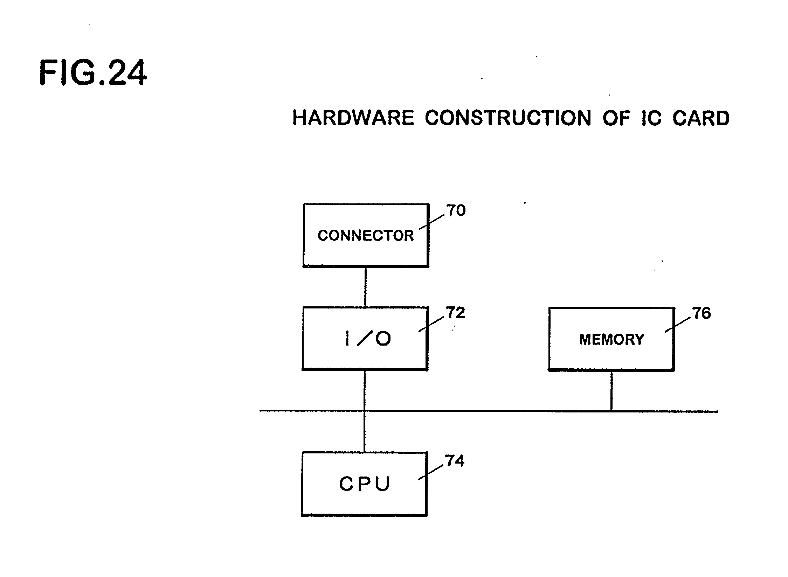

Fig. 24 shows a hardware structure of the IC card 66, which is connected to the receiving device 8. The IC card 66 forming a key reproduction device comprises CPU 74, interface 72, nonvolatile memory 76 and connector 70. The nonvolatile memory 76 is made of flash-memory and the like, and a contract for subscription for the user, a key Km for decoding and so on are stored therein.

### (3) Process for storing preview programs

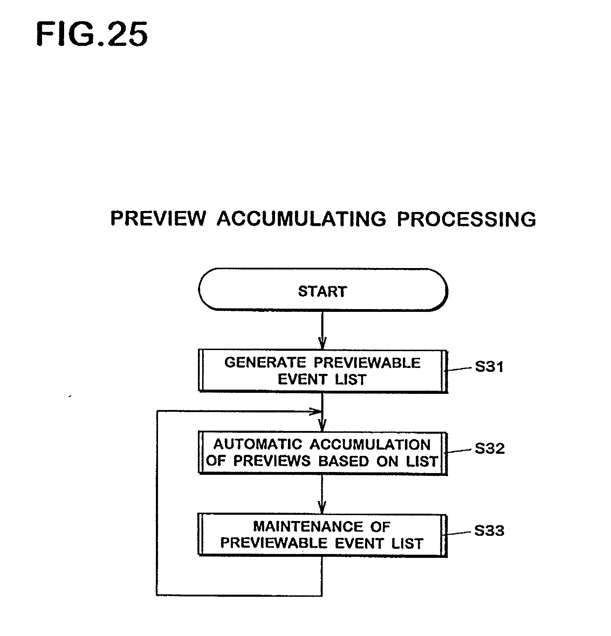

In this embodiment, independent of the routine processing, additional processing in which preview programs are automatically stored while the power supply of the receiving device 8 is on, is carried out. Fig. 25 shows a flowchart of a program that is stored in the ROM 54 for performing processing of storing preview programs.

The CPU 58 performs the following processes; creation of a list that lists pre-viewable services (step S31), automatic storage of preview program according to the list (step S32,), maintenance of the list of pre-viewable programs (step S33). In addition, the CPU automatically performs the maintenance of the list of pre-viewable programs and automatic storing of preview program according to the list repeatedly.

### (3-1) Creation of a list listing pre-viewable services

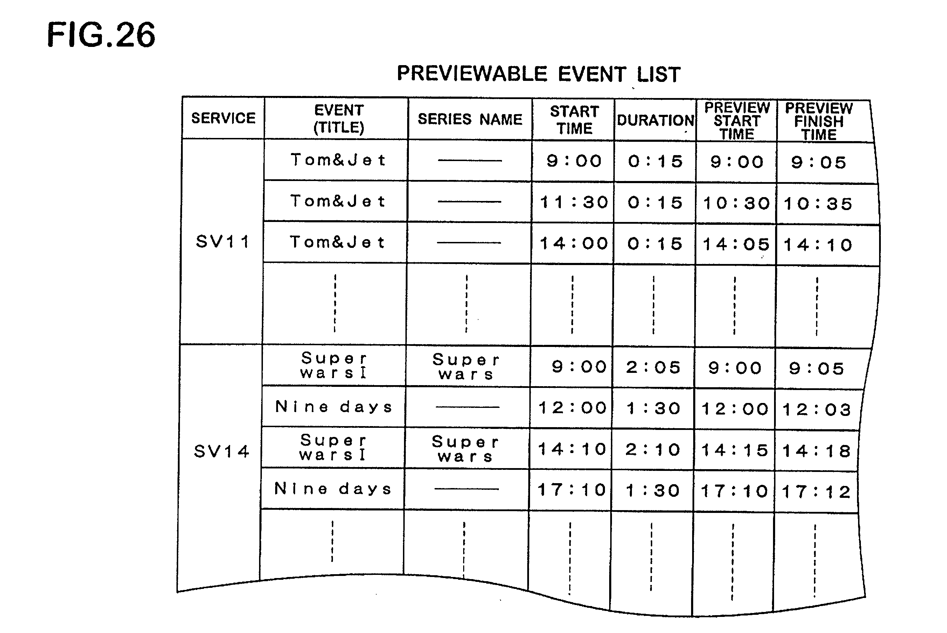

CPU 58 obtains the schedule EIT (long term service information) and obtains the pre-view information form this. CPU 58 recognizes which service can be pre viewed and when can that be pre-viewed according to the pre-view information. Then, CPU 58 makes a list listing previewable services as shown in Fig. 26 and records it into the hard disk 60.

As described above, in this embodiment the list listing pre-viewable services can be easily produced because the pre-view information is described in the scheduled EIT.

According to above mentioned process, it can be obtained which service can be pre-viewable and when the pre-view of the services start etc.

### (3-2) Automatic storing of preview programs according to a list

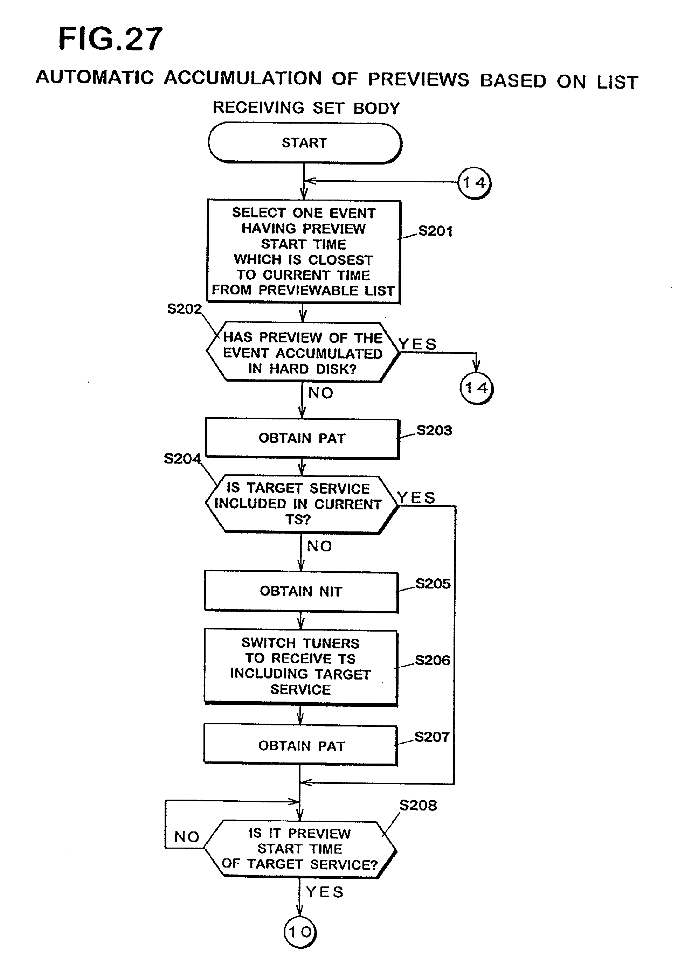

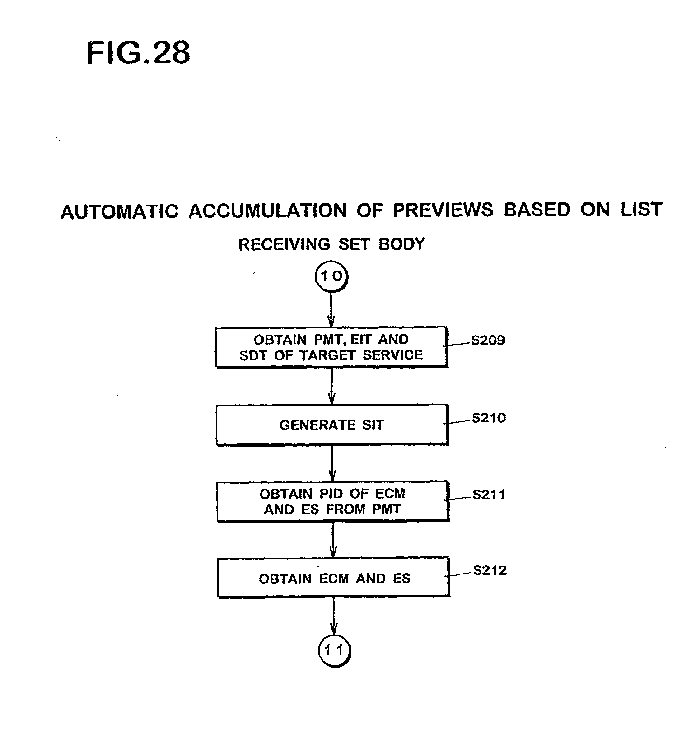

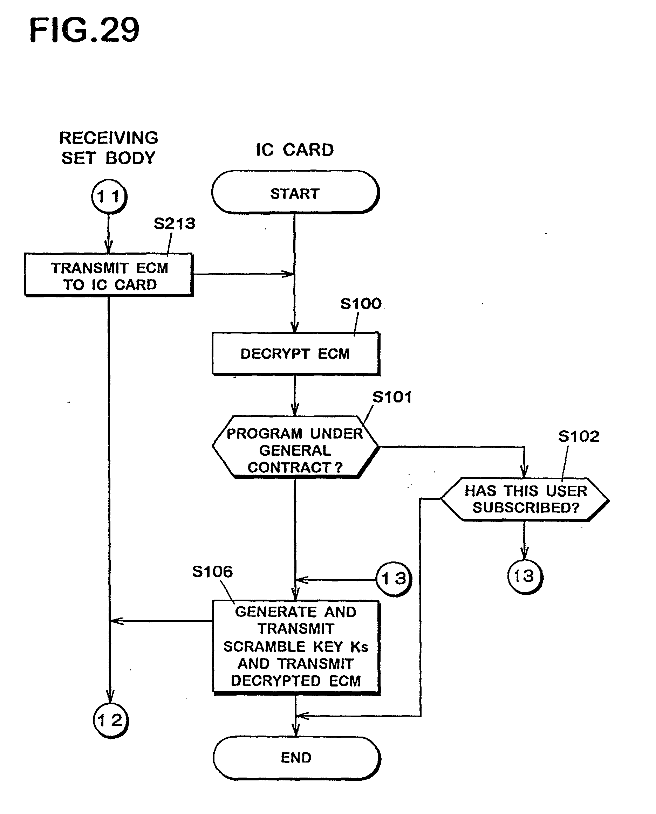

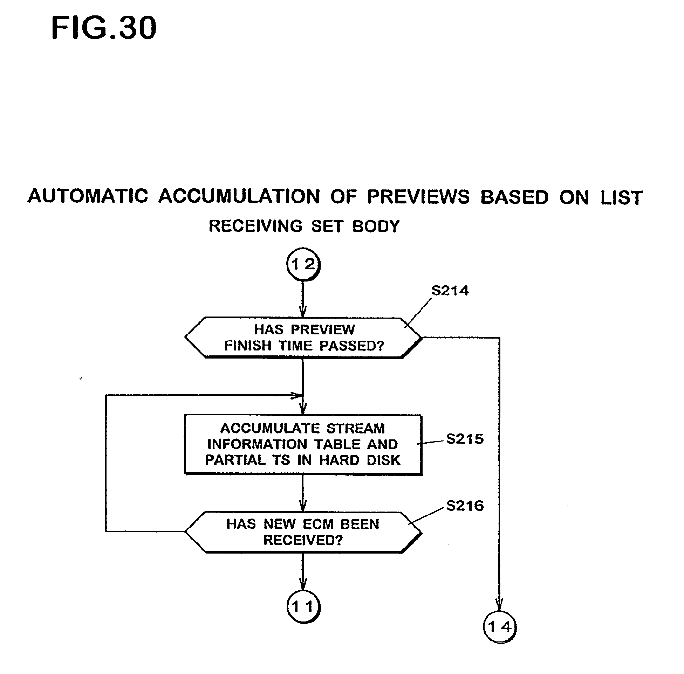

Subsequently, detailed process for automatically storing preview programs shown in step S32 of Fig. 25 will be described. Figs. 27 through 30 are flowcharts illustrating such process.

The CPU 58 selects one program, (event) from a pre-viewable service list (Fig. 26), that is started at the earliest time from the present time (step S201). If two or more programs satisfy such criteria (two or more programs are aired simultaneously), any one of them is selected. In Fig. 26, a program entitled "Tom & Jet" in the service SV11 is selected, for example.

Subsequently, the CPU 58 judges whether or not a preview program for the program has already been stored in the hard disk 60 (step S202). In other words, the CPU 58 checks if a program, which has the same tile "Tom & Jet" is stored in the hard disk 60. When such a program has been stored therein, the process returns to step S201, and the CPU 58 selects another program except this program that is started at the earliest time from the current time.

When the preview program has not been stored therein, the CPU 58 controls the TS decoder 48 to acquire PAT from the transport stream currently received (step S203). Next, the CPU 58 judges whether or not a service containing a selected program (service SV11 in the above example) exists in the transport stream currently received according to the PAT (step S204).

If no service exists, the CPU 58 acquires NIT (step S205) and controls the tuner to receive a transport stream containing the service to be processed and then performs step S208.

When the service SV11 containing a selected program exists at step S204, the process directly proceeds to step S208. As a consequence, the receiving device is in a condition under which the transport stream TS1 containing the selected program is received in order to receive the program.

At step S208, the CPU 58 judges whether or not start time 9:00 of the program comes according to the previewable service list. The current time can be known by information on time contained in any of broadcasts. When the current time has not become at the time of start time, it stands by till the start time of the program.

The current time has become at the time of start time for pre-view, the process proceeds to step S209, and acquires PMT, EIT, SDT of the service SV11 containing the program entitled "Tom & Jet"(step S209). Subsequently, control data SIT necessary for storing preview program(s) is generated (step S210).

During the storage, just elementary stream(s) ES (packetized data of image and audio), and PMT, PAT, EIT and so on related to the ES are stored, no information on other program(s) are needed. In this embodiment, a transport stream selecting information on the program (hereinafter referred to as partial transport stream) is generated and stored. Such partialization process is performed at step S215 described later. At step S210, new control data SIT is generated by extracting necessary information such as title of a program and the like from information such as EIT, NIT and so on. This SIT is recorded on the hard disk as data forming part of the partial transport stream).

Next, packet IDs of ECM and ES are acquired from PMT (step S211). The CPU 58 sets the packet IDs of ECM and ES in the transport decoder 48 in order to acquire ECM and ES (step S212). In regular reception, the CPU 58 controls the transport decoder 48 so that divided ES to be output to the AV decoder 52. During the storage processing, however, the CPU 58 controls the transport decoder 48 to send back the divided ES with packets.

Subsequently, the CPU 58 sends the acquired ECM back to the IC card 66 (step S213). On receipt of the ECM, the IC card 66 sends back a scramble-key Ks (step S106). When the CPU 58 detects the scramble-key Ks from the IC card 66 (step S214), it generates a partial transport stream and stores it in the hard disk 60 (step S215). At the same time, a stream information table is created and stored therewith.

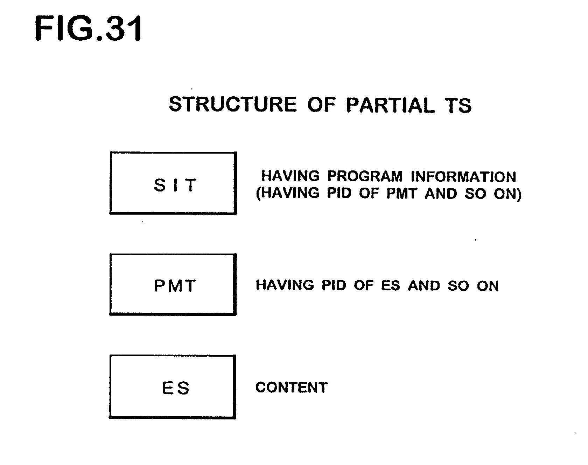

Fig. 31 shows the main structure of a partial transport stream generated by the CPU 58. The partial transport stream comprises content data ES of the program, PMT for describing a packet ID of the ES and so on, and SIT describing a packet ID of the PMT and information on the program.

As to Es, one selected and sent from the transport decoder 48 may be used. In this embodiment, decoded ES with a scramble-key Ks is stored. Also, as to PMT, new PMT deleting unnecessary information from original PMT can be generated and used. For example, a packet ID for acquiring a scramble-key Ks is described in original PMT. No description on packet ID of the ECM is necessary because the ES is stored with the decoded packet. In addition, as to SIT, one generated at step S210 is used.

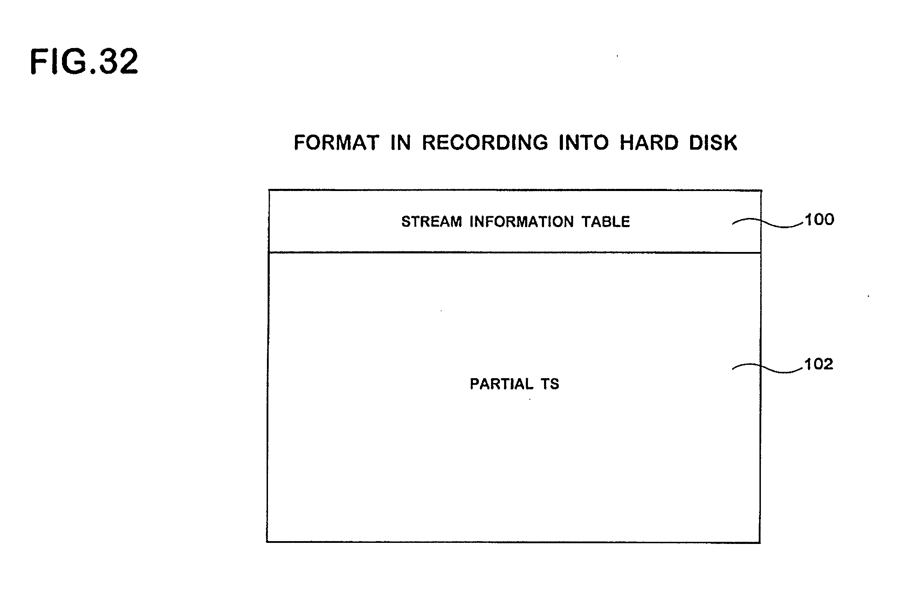

Fig. 32 shows a recording format of a preview program stored in the hard disk 60. A storage region 102 of a partial transport stream is a region for storing a preview program of the partial transport stream. A great number of preview programs are stored in the region 102. The CPU 58 stores these streams with unique stream IDs for their identification. In this embodiment, highlights (which picks up highlight scenes), normal content storage (storing the whole program(s) regularly performed) is stored in the region 102 in addition to preview programs.

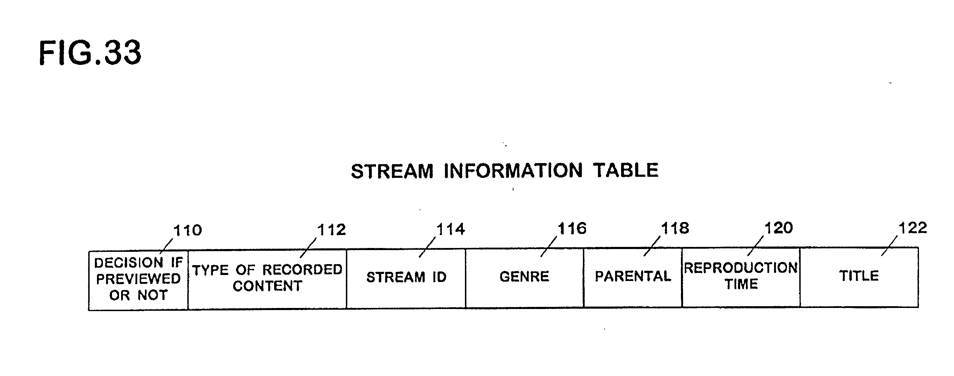

In order to manage these various partial transport streams for preview programs, the CPU 58 stores in a region 100 of a stream information table. The stream information table describes data such as illustrated in Fig. 33 for every preview program. The stream information table contains followings; an information column 110 indicating whether or not users view the preview programs, information on type of content 112 by which type of a content can be identified such as a preview program, highlights and a regular content, a stream ID of the transport stream, information on category of a content such as sports, films, information on parental guidance 118, and the title of a content and so on.

The CPU 58 initializes processing for storing a partial transport stream for a preview program in the hard disk 60 under a data format shown in Figs. 32 and 33. Subsequently, monitors whether or not ECM of a new version has been sent (step S216). ECM of a new version is sent from the transmission device at when just ahead of changing a scramble-key Ks. The CPU 58 acquires such new ECM by controlling the transport decoder 48. The ECM thus acquired is sent to the IC card 66 (step S213).

In response to the above step, the IC card 60 sends a scramble-key back to the IC card 66 (step S213, Fig. 25). Consequently, the receiving device can keep storing content data by decoding encryption.

The CPU 58 of the receiving device 8 judges whether the current time has passed the end time for pre-view described in the pre-viewable list (step S214). When the available time expires (current time passed the end time), CPU 58 stops to record the pre-view. Meanwhile, a flag in the pre-viewable list (not shown) is turned on (that indicates the program is stored)

Thereafter, the process proceeds to step S201, and selects a program, that has not been stored, but it's pre-view will start at the earliest time. Then a preview program is stored in a similar manner to the above. Automatic storing of preview programs according to a list ends when all the programs listed in the pre-viewable list are stored in the hard disk 60 by repeatedly performing these processes.

### (3-3) Maintenance of the pre-viewable list

When automatic storing of preview programs according to a list ends as described above, the CPU 58 performs step S33 of Fig. 25. The CPU 58 always keeps information on programs such as EIT and so on, conducts amendments of the pre-viewable list whenever its description varies or added. When any amendment to the pre-viewable list is made, the CPU 58 carries out automatic storage of preview program according to the list such as at step S32 again. As a consequence, new preview programs can be stored while updating information on programs.

### (3-4) Deletion of stored preview programs

When such automatic storage goes on, the capacity of the hard disk 60 will run short. To avoid such phenomenon, the CPU 58 deletes old preview program(s) whenever new preview program(s) is stored.

For example, such deletion can be carried out in order of length of time have stored. Alternatively, the deletion may also be carried out under the following priority rule. For example, programs already been viewed by users, programs not been viewed by users. The priority of deletion may also be determined by combining the above priority with the time and date of recording.

Alternatively, the highest priority of deletion may be given to preview program(s) by which the whole part of the program was already viewed by users. In that case, additional flag indicating that the main part has been viewed should be provided in addition to the flag shown in Fig. 33. Description will be made under an assumption that an automatic preview button 300 is selected.

### (4) Processing for viewing preview programs

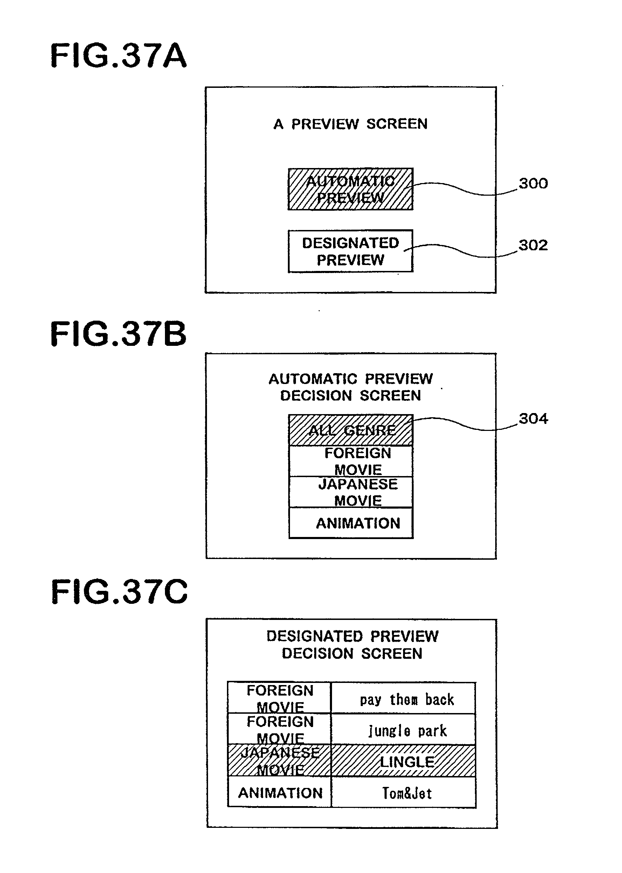

Next, a series of processes for viewing preview programs stored as above will be described. The CPU 58 outputs the TV set 36 an image illustrated in Fig. 37A as an image for receiving a determination of the user. The user moves the cursor with a remote controller (not shown) according to instructions of the image, and selects either of buttons indicating "Automatic preview" or "Preview select" and then depresses a button for determining command.

The description continues, assuming that an automatic preview button 300 is selected. The "Automatic preview" is a mode by which preview programs stored in receiving device 8 are displayed one after another.

Once the automatic preview button 300 shown in Fig. 73A is selected, the CPU 58 controls to display an image for selecting category of preview programs as shown in Fig. 37B. In response to the display, the user can selects to watch either preview programs of all categories or preview programs of a specific category. In this case, the description continues, assuming that a button 304 for all categories is selected.

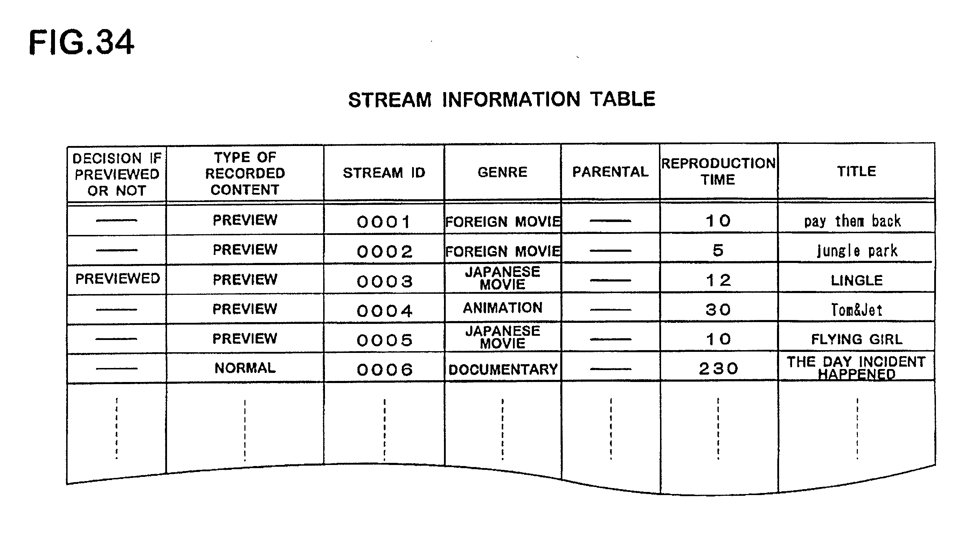

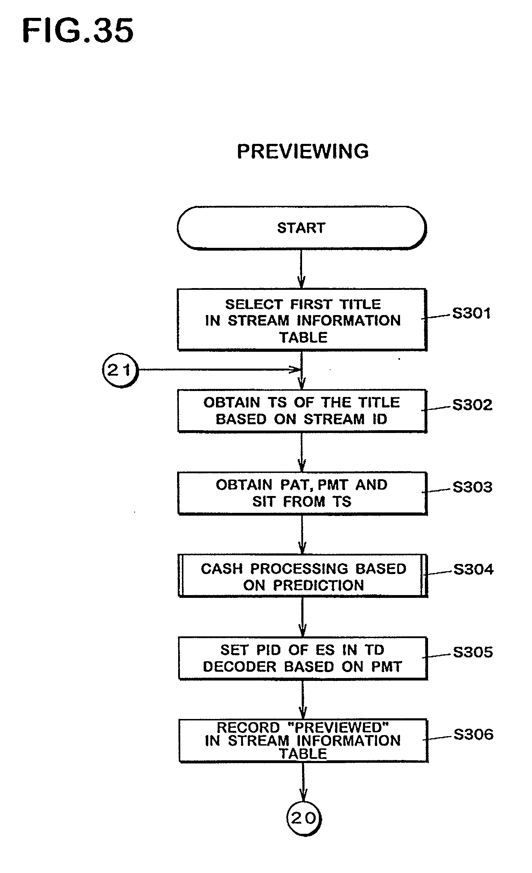

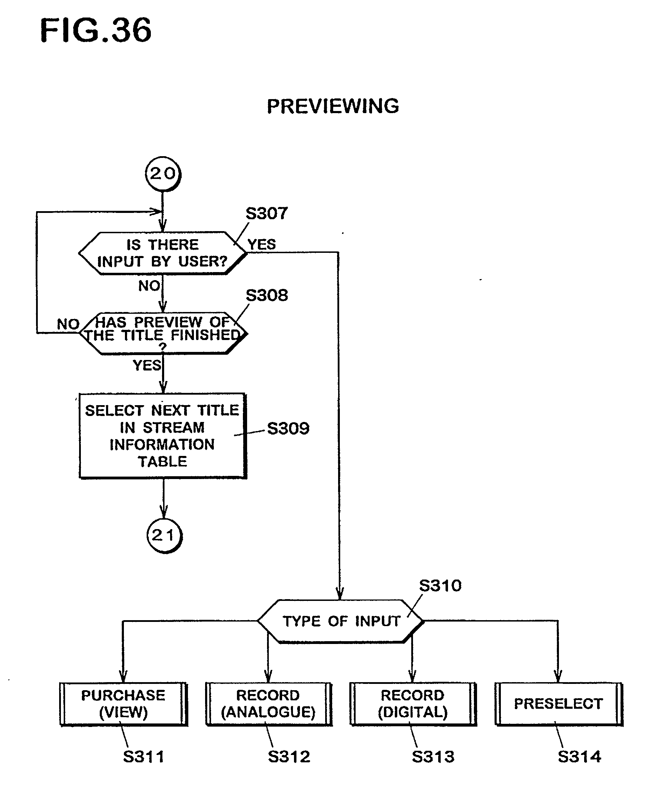

Figs. 35 and 36 show flowcharts of the process for automatic preview. At first, the CPU 58 reads out a stream information table from the hard disk 60 (step S301, Fig. 31). Fig. 34 shows an example of the stream information table recorded in the hard disk. The CPU 58 selects the first preview program out of the preview programs listed on the table and makes it as a preview program to be processed. Here, a preview program for a program entitled "Pay them back" is selected.

Subsequently, a stream ID "0001" of that preview program is read out in order to read out its partial transport stream (step S302). The partial transport stream thus read out is provided to the TS decoder 48. Then, the CPU 58 sets a packet ID of PAT to the TS decoder 48 in order to acquire PAT. Further, the CPU acquires packet Ids of PMT and SIT from the acquired PAT and sets them to the TS decoder 48 in order to acquire PMT and SIT. In this way, PAT, PMT, and SIT are acquired from the partial transport stream (Step S303).

Next, cache storage process for preparing a subscription of program is carried out (step S304). The cache storage process is a process by which the whole part of the program corresponding to the preview is stored prior to a subscription thereof. Details of the process will be described later in detail.

Subsequent to the cache storage process, the CPU 58 provides the partial transport stream thus read out to the TS decoder 48. Furthermore, the CPU sets a packet ID of a preview program's ES, which is obtained according to the PMT to the TS decoder 48. Hence, the TS decoder 48 selects ES of a program entitled "Pay them back" out of the partial transport stream, and outputs the ES to the AV decoder 52. In this way, a preview program of "Pay them back" is output to the TV set 36

The CPU 58 controls to turn on a flag in a column of the table shown in Fig. 34, the flag indicating the preview program has been viewed (step S306, Fig. 31). During the process, the CPU 58 sits and waits for input by the user (step S307, Fig. 32). When the user makes none of input, the output of the preview program thus recorded continues till the program ends (step S308, Fig. 32).

When the program ends, the CPU 58 makes the subsequent preview program as a preview program to be processed (step S309), and steps following the step S302 are performed. As a consequence, the subsequent preview program corresponding to a program entitled "Jungle Park" is output. Hence, preview programs listed on the stream information table are output one after another.

When the user selects any of the categories on an image shown in Fig. 37B, the CPU 58 selects preview program(s) belonging to that category out of the stream information table and outputs the preview program(s).

When the user selects a selected preview button 302 on an image shown in Fig. 37A,the CPU 58 controls to display an image shown in Fig. 37C by reading out columns of title and category from of the stream information table. Then the user selects a preview program, which has a specific title, and depresses the determination button. Consequently, the CPU 58 outputs just preview program(s) belonging to that category to the TV set 36. If the determination button is depressed when the image shown in Fig. 37C is displayed, a preview program entitled ""Rings" is displayed.

### (5) Other Embodiment

In the above embodiment, all the previewable contents are accumulated. However, the system may be adapted to accumulate previews of programs in the genre designated by the user in advance.

In the above embodiment, the preview is displayed in response to a user command. However, the system may be adapted to display accumulated previews during a process which takes time such as genre retrieving, or may be adapted to display previews of the programs in the genre which the user is going to retrieve.

In the above embodiment, the preview parts of the programs are accumulated. However the system may be adapted to extract and accumulate a part of a program other than the preview part (a highlight scene, for example).

Description has been made of a case of a receiving set including an accumulating part. However, the accumulating part may be separated from the receiving set.

Although the present invention has been described in its preferred embodiments, it is to be understood that the above description is intended to be illustrative and not restrictive and that various changes and modifications can be made in the scope of the accompanying claims without departing from the scope and spirit of the present invention.

## Claims

1. A broadcasting system comprising a transmitting set and a receiving set,
said transmitting set comprising a multiplexing part for multiplexing a plurality of contents together with partial availability information for indicating that a part of each of said plurality of contents is available on a receiving side to generate a broadcasting signal, and a transmitting part for transmitting said broadcasting signal,
said receiving set comprising a receiving part for receiving said broadcasting signal transmitted, and a reproducing and controlling part for reproducing said contents from said broadcasting signal received by said receiving part and outputting thus reproduced contents, and for outputting content information indicating which extracted parts of which contents are available based on said partial availability information.

2. A transmitting set comprising
a multiplexing part for multiplexing a plurality of contents together with partial availability information for indicating that a part of each of said plurality of contents is available on a receiving side to generate a broadcasting signal, and a transmitting part for transmitting said broadcasting signal.

3. A broadcasting signal generating device for generating a signal for broadcasting by multiplexing a plurality of contents together with partial availability information for indicating that a part of each of said plurality of contents is available.

4. A device of Claim 2 or 3, further comprising
a partial content extracting and uniting part for extracting a part from each of plurality of contents as a partial content based on said partial availability information and generating a content by uniting said partial contents.

5. A device of any one of Claims 2 to 4,
wherein said partial availability information includes information on whether each of a plurality of contents which are currently being broadcasted is partially available or not.

6. A device of any one of Claims 2 to 5,
wherein said partial availability information includes information on whether each of a plurality of contents which are to be broadcasted in the future is partially available or not.

7. A device of any one of Claims 2 to 6,
wherein said part of content is a part of said content designated by time.

8. A device of any one of Claims 2 to 6,
wherein said part of content is a part of components constituting said content.

9. A device of any one of Claims 2 to 6,
wherein said part of content is a part of video of said content.

10. A device of Claim 7,
wherein said partial availability information includes information that a part of each of said contents can be previewed.

11. A device of Claim 7 or 10,
wherein said partial availability information includes information on one of start time, finish time and duration of a preview of each of previewable contents.

12. A device of Claim 7, 10 or 11,
wherein said partial availability information includes information on the number of times each of said previewable contents can be previewed.

13. A device of Claim 7,
wherein said partial availability information includes information that a scene to be taken into consideration included in a content is available by itself.

14. A device of Claim 7 or 13,
wherein said partial availability information includes information on one of start time, finish time and duration of said scene to be taken into consideration included in a content.

15. A device of any one of Claims 2 to 14,
wherein said partial availability information is transmitted as a part of EIT data.

16. A device of Claim 15,
wherein said EIT data are schedule EIT data including information on long-term programs.

17. A device of Claim 15,
wherein said EIT data are p/f EIT data including information on short-term programs.

18. A receiving set comprising a receiving part for receiving a broadcasting signal transmitted, and a reproducing and controlling unit for reproducing contents from said broadcasting signal received by said receiving part and outputting thus reproduced contents, and for outputting content information indicating which extracted parts of which contents are available based on said partial availability information.

19. A computer program for realizing, using a computer, a reproducing and controlling part for reproducing contents from a broadcasting signal received and outputting thus reproduced contents, and for outputting content information indicating which extracted parts of which contents are available based on said partial availability information.

20. A recording medium in which said program of Claim 19 has been stored.

21. A device of any one of Claims 18 to 20,
wherein said reproducing and controlling part displays said content information in an electronic program list.

22. A device of any one of Claims 18 to 21,
wherein said partial availability information includes information on whether each of a plurality of contents which are currently being broadcasted is partially available or not, and
wherein said reproducing and controlling part displays content information indicating whether each of a plurality of contents which are currently being broadcasted is partially available or not based on said partial availability information.

23. A device of any one of Claims 18 to 22,
wherein said partial availability information includes information on whether each of a plurality of contents which are to be broadcasted in the future is partially available or not, and
wherein said reproducing and controlling part displays contents information indicating whether each of a plurality of contents which are to be broadcasted in the future is partially available or not based on said partial availability information.

24. A device of any one of Claims 18 to 23,
wherein said part of content is a part of said content designated by time.

25. A device of any one of Claims 18 to 23,
wherein said part of content is a part of components constituting said content.

26. A device of any one of Claims 18 to 23,
wherein said part of content is a part of video of said content.

27. A device of Claim 24,
wherein said partial availability information includes information indicating that a part of each of pay contents can be previewed, and
wherein said controlling and reproducing part displays content information on whether each of a plurality of contents can be partially previewed or not based on said partial availability information.

28. A device of Claim 24 or 27,
wherein said partial availability information includes information on one of start time, finish time and duration of a preview of each of previewable contents, and
wherein said controlling and reproducing part displays content information including one of start time, finish time and duration of a preview of each of said previewable contents based on said partial availability information.

29. A device of Claim 24 or 27,
wherein said partial availability information includes information on hours during which each of previewable contents can be previewed, and
wherein said controlling and reproducing part checks whether it is in hours during which a previewable content can be previewed or not at the moment based on said partial availability information and determines whether said previewable content is allowed to be previewed or not.

30. A device of Claim 24, 27, 28 or 29,
wherein said partial availability information includes information on the number of times each of said previewable contents can be previewed, and
wherein said controlling and reproducing part displays content information including the number of times each of said previewable contents can be previewed.

31. A device of any one of Claims 18 to 30,
wherein said partial availability information includes information that a scene to be taken into consideration included in a content is available by itself, and
wherein said controlling and reproducing part displays content information including whether said scene to be taken into consideration can be previewed by itself or not.

32. A device of any one of Claims 18 to 31,
wherein said partial availability information includes information on one of start time, finish time and duration of said scene to be taken into consideration included in a content, and
wherein said controlling and reproducing part displays content information including one of start time, finish time and duration of said scene to be taken into consideration.

33. An accumulation type receiving set comprising
a receiving part for receiving contents transmitted from a transmitting set, an accumulating part for accumulating contents, a controlling part for controlling at least a reproducing part, and a reproducing part for reproducing said contents received by said receiving part or accumulated in said accumulating part according to the control of said controlling part,
said controlling part comprising an accumulation controlling part for judging which contents are partially viewable based on partial availability information and for controlling said reproducing part to take out a part of each of said previewable contents and output said part of content to said accumulating part, and a reproduction controlling part for reading and reproducing said partial contents accumulate in said accumulating part and for outputting thus reproduced partial contents.

34. An accumulation controlling device for accumulating contents received by a receiving part in an accumulating part and for reading and reproducing said contents accumulated in said accumulating part,
said accumulation controlling device comprising an accumulation controlling part for judging which contents are partially viewable based on partial availability information and for controlling said reproducing part to take out a part of each of said previewable contents and output said part of content to said accumulating part, and a reproduction controlling part for reading and reproducing said partial contents accumulate in said accumulating part and for outputting thus reproduced partial contents when necessary.

35. A program for controlling a receiving set for receiving and accumulating contents transmitted and for reproducing said accumulated contents and outputting thus reproduced contents.
said program being for realizing a function as a controlling part comprising an accumulation controlling part for judging which contents are partially viewable based on partial availability information and for controlling said reproducing part to take out a part of each of said previewable contents and output said part of content to said accumulating part, and a reproduction controlling part for reading and reproducing said partial contents accumulate in said accumulating part and for outputting thus reproduced partial contents when necessary.

36. A recording medium in which said program of Claim 35 has been stored.

37. A receiving set comprising
a tuner for receiving a transport stream transmitted, a transport decoder for selecting and restoring contents from an output of said tuner, and a CPU for controlling at least said transport decoder according to a recorded program.
wherein said CPU controls said transport decoder to output content information indicating which extracted parts of which contents are available based on said program and according to partial availability information.

38. A broadcasting system comprising a transmitting set and a receiving set,
wherein said transmitting set multiplexed a plurality of contents together with partial availability information for indicating that a part of each of said plurality of contents is available on a receiving side to generate a broadcasting signal, and transmits said broadcasting signal, and
wherein said receiving set receives said broadcasting signal transmitted, reproduces said contents from said broadcasting signal received and outputs thus reproduced contents, and outputs content information indicating which extracted parts of which contents are available based on partial availability information.
